(19) 

Europäisches
Patentamt

European
Patent Office

Office européen
des brevets

(11)  **EP 4 307 187 A1**

(12)  **EUROPEAN PATENT APPLICATION**
published in accordance with Art. 153(4) EPC

(43)  Date of publication:
**17.01.2024  Bulletin 2024/03**

(21)  Application number: **22766925.6**

(22)  Date of filing: **01.03.2022**

(51)  International Patent Classification (IPC):
*G06N 20/00* (2019.01)  *G06N 3/08* (2023.01)

(52)  Cooperative Patent Classification (CPC):
**G06N 3/02; G06N 3/08; G06N 20/00**

(86)  International application number:
**PCT/JP2022/008658**

(87)  International publication number:
**WO 2022/190966 (15.09.2022 Gazette 2022/37)**

(84)  Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30)  Priority:  **08.03.2021  JP 2021036254**

(71)  Applicant: **OMRON Corporation
Kyoto 600-8530 (JP)**

(72)  Inventor: **NAGAE, Shigenori
Kyoto-shi, Kyoto 600-8530 (JP)**

(74)  Representative: **Becker, Eberhard et al
Becker Kurig & Partner
Patentanwälte mbB
Bavariastraße 7
80336 München (DE)**

(54)  **INFERENCE DEVICE, MODEL GENERATION DEVICE, INFERENCE METHOD, AND INFERENCE PROGRAM**

(57)  An inference device according to one aspect of the present invention acquires target data, executes an inference task on the acquired target data using an inference model that has been trained through machine learning, and outputs information pertaining to the result of having executed the inference task. At least some of a plurality of parameters of the inference model are represented by a matrix. The matrix includes a first submatrix and a second submatrix. An adjustment is made so that the numbers of respective row and column elements of the first and second submatrices are the same, and so that the value of each element of the second submatrix matches the product of the first submatrix and a diagonal matrix.

$$Y = \begin{bmatrix} y_1 \\ y_2 \end{bmatrix} = \begin{bmatrix} w_1 & w_2 \\ w_3 & w_4 \end{bmatrix} \begin{bmatrix} x_1 \\ x_2 \end{bmatrix}$$

$$= \begin{bmatrix} w_1 & w_2 \\ a_1 w_1 & a_2 w_2 \end{bmatrix} \begin{bmatrix} x_1 \\ x_2 \end{bmatrix}$$

$$= \begin{bmatrix} w_1 x_1 + w_2 x_2 \\ a_1 w_1 x_1 + a_2 w_2 x_2 \end{bmatrix}$$

**FIG. 1**

EP 4 307 187 A1

**Description**

[Technical Field]

The present invention relates to an inference device, a model generation device, an inference method, and an inference program.

[Background Art]

In the related art, technology for inspecting the quality of products by imaging products to be manufactured with an imaging device and analyzing obtained image data in a situation in which products are manufactured such as a production line has been developed. For example, Patent Literature 1 proposes an inspection device that determines whether an object shown in an image is normal or abnormal by using a trained first neural network and classifies the type of abnormality by using a trained second neural network when it is determined that the object is abnormal.

According to a method using a trained neural network, it is possible to inspect the appearance of a product based on computation results of the trained neural network without manually specifying details of image processing. For this reason, it is possible to simplify information processing of appearance inspection and reduce the effort required to create an inspection program. This operational effect is not necessarily obtained only in a case where a neural network is used. Also in methods using trained machine learning models other than a neural network (for example, principal component vectors obtained by principal component analysis, support vector machines, and the like), it is possible to simplify information processing of appearance inspection and reduce the effort required to create an inspection program.

Additionally, inference tasks that can be performed by trained machine learning models are not limited to appearance inspection and inference on images. By using learning data corresponding to desired information processing in machine learning, it is possible to generate a trained machine learning model that has acquired the ability to perform desired inference tasks on a predetermined type of data. Thus, according to the method using a trained machine learning model, it is possible to simplify information processing for performing a desired inference task on a predetermined type of data and reduce the effort required to create an inference program.

In general, machine learning models have parameters that are used to compute inference tasks. The values of the parameters are adjusted by machine learning to obtain a desired output for a desired input (that is, to obtain the ability to perform a desired inference task). When a neural network is adopted for a machine learning model, this parameter is, for example, a weight of connection between neurons. The number of parameters that constitute a machine learning model tends to increase as attempts to increase the accuracy of performance of an inference task increase. Particularly, in cases where neural networks are adopted in machine learning models, there is a tendency to deepen the hierarchy of neural networks in order to increase the accuracy of performance of inference tasks, and the number of parameters that constitute a neural network increases as the hierarchy of the neural network becomes deeper.

As a matter of course, as the number of parameters that constitute a machine learning model increases, the accuracy of performance of an inference task can be expected to improve, but the amount of calculation required for computation processing of the machine learning model increases. For this reason, in both a machine learning situation and an inference task performance situation, problems associated with an increase in the amount of calculation such as a delay of a calculation time, compression of a memory, high power consumption due to time-consuming calculation, and computation being able to be completed in the case of an expensive computer occur (that is, a load is imposed on calculational resources).

Consequently, Patent Literature 2 and Patent Literature 3 propose methods of speeding up computation processing of a machine learning model by distribution processing. Specifically, Patent Literature 2 proposes a method of performing deep learning in a distributed manner by exchanging quantization gradients between a plurality of learning devices and distributed deep learning devices. Patent Literature 3 proposes a method in which a plurality of learning nodes are connected via a ring-type communication network capable of unidirectional communication, and deep learning is performed in a distributed manner through cooperative processing among the learning nodes. Non-Patent Literature 1 proposes a method of reducing the number of calculations in a convolution operation by converting the calculation of a product of input data and parameters into a calculation formula of a different expression using a fast Fourier transform.

[Citation List]

[Patent Literature]

[Patent Literature 1]

Japanese Patent Laid-Open No. 2012-026982
[Patent Literature 2]
Japanese Patent Laid-Open No. 2018-120441
[Patent Literature 3]
Japanese Patent Laid-Open No. 2020-003848

[Non-Patent Literature]

[Non-Patent Literature 1]
Tyler Highlander, Andres Rodriguez, "Very Efficient Training of Convolutional Neural Networks using Fast Fourier Transform and Overlap-and-Add," arXiv:1601.06815 [cs.NE], 25 Jan 2016.

[Summary of Invention]

[Technical Problem]

The inventors of the present invention have found that the above-described method of the related art has the following problems. That is, in a method that depends only on distribution processing, it is possible to reduce a load on each computer and speed up computation processing by connecting a plurality of computers, but it is difficult to reduce the amount of calculation required for computation processing of a machine learning model. On the contrary, the amount of calculation required for computation processing of the machine learning model increases by the amount of information on a calculation process that is communicated between computers, and a load on calculational resources increases as a whole. Although it is possible to speed up a convolution operation in the method using a fast Fourier transform as in Non-Patent Literature 1, it is difficult to apply it to other computations. A load on calculational resources increases (particularly, a memory is compressed) by the amount of stored information on parameters of a machine learning model and information on a different expression obtained by a fast Fourier transform. Thus, in the method of the related art, it is difficult to reduce the amount of calculation required for computation processing of a machine learning model and reduce a load on calculational resources.

In one aspect, the present invention has been made in view of such circumstances, and an object thereof is to provide technology for reducing the amount of calculation required for computation processing of a machine learning model and reducing a load on calculational resources.

[Solution to Problem]

The present invention adopts the following configurations in order to solve the above-described problems.

That is, an inference device according to one aspect of the present invention includes a data acquisition unit that acquires target data, an inference unit that performs an inference task on the acquired target data by using an inference model trained by machine learning, and an output unit that outputs information on a result of performing the inference task. At least some of a plurality of parameters of the inference model are represented by a matrix. The matrix includes a first submatrix and a second submatrix. The number of elements in each row and each column of the first submatrix and the second submatrix are the same, and a value of each element of the second submatrix is adjusted to match a product of the first submatrix and a diagonal matrix.

In this configuration, at least some of the plurality of parameters of the inference model can be represented by a matrix including the first submatrix and the second submatrix, and the value of each element of the second submatrix is adjusted to match a product of the first submatrix and the diagonal matrix. For this reason, even when the information on the second submatrix is not stored, a computation result of the first submatrix can be reused to obtain a computation result of the second submatrix. Thus, according to this configuration, it is possible to substantially reduce the number of parameters that constitute the inference model. Specifically, the number of parameters can be reduced by a difference between the number of elements of the second submatrix and the number of elements of the diagonal matrix other than 0. Thereby, it is possible to reduce the amount of calculation required for computation processing of the inference model and reduce a load on calculational resources.

In the inference device according to the above-described aspect, in at least a portion of the matrix, a scaling relationship may be established such that at least a portion of the matrix is divided into $M \times N$ submatrices so that submatrices having the same number of elements in each row and each column are arranged in M rows and N columns, the submatrix disposed in any one row constitutes the first submatrix for submatrices disposed in rows other than the row in each column, and the submatrices disposed in the other rows constitute the second submatrix. According to this configuration, it is possible to effectively reduce the number of parameters of the inference model by establishing the scaling relationship. Thereby, it is possible to effectively reduce the amount of calculation required for computation processing of the inference model and to reduce a load on calculational resources.

In the inference device according to the above-described aspect, M and N may be the same prime number S. According to this configuration, it is possible to easily adjust a range in which the scaling relationship is established.

In the inference device according to the above-described aspect, the scaling relationship may be recursively established within at least a portion of the matrix by repeating the establishment of the scaling relationship within the submatrices that constitute the first submatrix. According to this configuration, since the scaling relationship is established recursively, it is possible to achieve a reduction in the number of parameters even within the first submatrix in the scaling relationship that is finally established (that is, on the outermost side). Thus, it is possible to further effectively reduce the amount of calculation required for computation processing of the inference model and to further reduce a load on calculational resources. The establishment of the scaling relationship may be repeated until each submatrix becomes a matrix having an arbitrary size (for example, a 1×1 matrix).

In the inference device according to the above-described aspect, M and N may be the same prime number S, and at least a portion of the matrix may be constituted by a square matrix of which the number of elements is a power of the prime number S. According to this configuration, it is possible to easily adjust a range in which the scaling relationship is established.

In the inference device according to the above-described aspect, M and N may be each 2. According to this configuration, it is possible to easily adjust a range in which the scaling relationship is established.

In the inference device according to the above-described aspect, the inference model may be constituted by a neural network, and each element of the matrix may be configured to correspond to a weight of connection between neurons in the neural network. According to this configuration, in a scene in which a neural network is adopted as an inference model (machine learning model), it is possible to reduce the amount of calculation required for computation processing of the inference model and to reduce a load on calculational resources.

In the inference device according to the above-described aspect, the target data may be constituted by image data showing a product, and the inference task may be to determine whether the product shown in the image data has a defect. According to this configuration, in a scene in which the appearance of a product is inspected using a trained inference model, it is possible to reduce the amount of calculation required for computation processing of the inference model and to reduce a load on calculational resources.

The configuration of the present invention may not be limited to the inference device described above. One aspect of the present invention may be a model generation device that generates a trained inference model used in the inference device according to any one of the above aspects.

For example, a model generation device according to one aspect of the present invention includes a data acquisition unit that acquires a plurality of learning data sets each constituted by a combination of training data and a correct answer label indicating a correct answer of an inference task for the training data, and a learning processing unit that performs machine learning of an inference model by using the plurality of learning data sets. At least some of a plurality of parameters of the inference model are represented by a matrix. The matrix includes a first submatrix and a second submatrix. The number of elements in each row and each column of the first submatrix and the second submatrix are the same. The machine learning is performed for each of the learning data sets by training the inference model so that a result of performing the inference task on the training data by using the inference model matches a correct answer indicated by the correct answer label and a value of each element of the second submatrix is adjusted to match a product of the first submatrix and a diagonal matrix. According to this configuration, it is possible to reduce the amount of calculation required for computation processing of the inference model and to reduce a load on calculational resources when generating a trained inference model.

In the model generation device according to the above-described aspect, training the inference model may include adjusting a value of each element of the matrix so that a scaling relationship is established in at least a portion of the matrix, the scaling relationship being established such that at least a portion of the matrix is divided into M × N submatrices so that submatrices having the same number of elements in each row and each column are arranged in M rows and N columns, the submatrix disposed in any one row constitutes the first submatrix for submatrices disposed in rows other than the row in each column, and the submatrices disposed in the other rows constitute the second submatrix. According to this configuration, it is possible to reduce the amount of calculation required for computation processing of the inference model by an extent that the scaling relationship is established and to reduce a load on calculational resources. Based on the establishment of the scaling relationship, it is possible to manage the amount of reduction in the amount of calculation required for computation processing of the inference model. The establishment of the scaling relationship may be repeated within the submatrices that constitute the first submatrix until each submatrix becomes a matrix having an arbitrary size (for example, a 1×1 matrix).

In the model generation device according to the above-described aspect, the inference model may be constituted by a neural network. Each element of the matrix may be configured to correspond to a weight of connection between neurons in the neural network. Training the inference model may include adjusting a value of each element of at least a portion of the matrix so that the scaling relationship is recursively established within at least a portion of the matrix by repeating the establishment of the scaling relationship in the submatrices that constitute the first submatrix until each submatrix becomes a $1\times1$ matrix. Adjusting the value of each element of at least a portion of the matrix may include giving an initial value of each element of at least a portion of the matrix so that the scaling relationship is recursively established, deriving a result of performing an inference task on the training data of each learning data set in a forward propagation phase, and adjusting values of each element of at least a portion of the matrix and each element of the diagonal matrix by backpropagating a gradient of an error between the derived result of performing the inference task and a corresponding correct answer indicated by a correct answer label in a backpropagation phase. Computation of the forward propagation phase may include a first step of calculating a product of the $1\times1$ matrix constituting an initial first submatrix and an input vector, a second step of deriving a product of the $1\times1$ matrix constituting an initial second submatrix and an input vector by calculating a product of a result of the obtained product of the initial first submatrix and a corresponding element of the diagonal matrix, a third step of deriving a product of a submatrix constituting a first submatrix in a next stage and an input vector from the result of the product of the first submatrix and the result of the product of the second submatrix which are obtained in a target stage, a fourth step of deriving a product of a submatrix constituting the second submatrix in a next stage and an input vector by calculating a product of the result of the obtained product of the first submatrix in the next stage and a corresponding element of the diagonal matrix, and a fifth step of deriving a product of at least a portion of the matrix and an input vector by substituting the result of the product of the initial first submatrix and the result of the product of the initial second submatrix, which are respectively obtained in the first step and the second step, as initial values of the result of the product of the first submatrix and the result of the product of the second submatrix which are obtained in the target stage, and recursively repeating the third step and the fourth step. Computation of the backpropagation phase may include a first step of acquiring a gradient of the error with respect to the product of at least a portion of the matrix and the input vector, a second step of deriving a gradient of an error for each element of a diagonal matrix used in a final stage of the recursive repetition of the forward propagation phase, based on the acquired gradient of the error and a value of a product of a submatrix constituting the first submatrix and an input vector in the final stage, a third step of deriving a gradient of an error for a product of a submatrix constituting the first submatrix in the final stage and an input vector, based on the acquired gradient of the error and a value of each element of the diagonal matrix used in the final stage, a fourth step of deriving a gradient of an error for each element of the diagonal matrix used in the target stage, based on the acquired gradient of the error, a value of a product of the submatrix constituting the first submatrix and an input vector in a target stage of the recursive repetition of the forward propagation phase, and a gradient of an error for a product of the submatrix constituting the first submatrix and an input vector in a stage next to the target stage in the recursive repetition of the forward propagation phase, a fifth step of deriving a gradient of an error for a product of the submatrix constituting the first submatrix and an input vector in the target stage, based on the acquired gradient of the error, a value of each element of the diagonal matrix used in the target stage, and a gradient of an error for a product of the submatrix constituting the first submatrix and the input vector in the next stage, a sixth step of deriving a gradient of an error for each element of a diagonal matrix used in each stage by substituting the gradient of the error for the product of the submatrix constituting the first submatrix and the input vector in the final stage, which is derived in the third step of the backpropagation phase, as an initial value of the gradient of the error for the product of the submatrix constituting the first submatrix and the input vector in the next stage, and recursively repeating the fourth and fifth steps of the backpropagation phase until a gradient of an error for each element of a diagonal matrix used in an initial stage of the recursively repetition of the forward propagation phase is derived, a seventh step of deriving a gradient of an error for an element of the $1\times1$ matrix constituting the initial first submatrix, based on the input vector and the gradient of the error for the product of the submatrix constituting the first submatrix and the input vector in the initial stage, which is derived in the sixth step, and an eighth step of adjusting values of each of elements of the diagonal matrix used in each stage and each of the elements of the $1\times1$ matrix constituting the initial first submatrix, based on the gradient of the error which is derived for each of the elements of the diagonal matrix used in each stage and each of the elements of the $1\times1$ matrix constituting the initial first submatrix. According to this configuration, in a scene in which a neural network is adopted as an inference model (machine learning model), the value of each parameter of the inference model can be adjusted such that the scaling relationship is recursively established in the process of machine learning. As a result, it is possible to achieve a reduction in the number of parameters even within the first submatrix in the finally established scaling relationship. Thus, according to this configuration, it is possible to further reduce the amount of calculation required for computation processing of the inference model and to further reduce a load on calculational resources. In this configuration, the $1\times1$ matrix may be replaced with a unit matrix having an arbitrary size.

As another aspect of each of the inference device and the model generation device according to the above-described configurations, one aspect of the present invention may be an information processing method that realizes all or some of the above-described configurations, may be a program, or a storage medium that stores such a program and is readable by a computer, other devices, machines, or the like. Here, a computer-readable storage medium is a medium that stores information such as programs by an electrical, magnetic, optical, mechanical, or chemical action. One aspect of the present invention may be an inference system constituted by the inference device and the model generation device according to any one of the above-described configurations.

For example, an inference method according to one aspect of the present invention may be an information processing method of causing a computer to execute the following steps including acquiring target data, performing an inference task on the acquired target data by using an inference model trained by machine learning, and outputting information on a result of performing the inference task, in which at least some of a plurality of parameters of the inference model are represented by a matrix, the matrix includes a first submatrix and a second submatrix, the number of elements in each row and each column of the first submatrix and the second submatrix are the same, and a value of each element of the second submatrix is adjusted to match a product of the first submatrix and a diagonal matrix.

For example, an inference program according to one aspect of the present invention is a program causing a computer to execute the following steps including acquiring target data, performing an inference task on the acquired target data by using an inference model trained by machine learning, and outputting information on a result of performing the inference task, in which at least some of a plurality of parameters of the inference model are represented by a matrix, the matrix includes a first submatrix and a second submatrix, the number of elements in each row and each column of the first submatrix and the second submatrix are the same, and a value of each element of the second submatrix is adjusted to match a product of the first submatrix and a diagonal matrix.

[Advantageous Effects of Invention]

According to the present invention, it is possible to reduce the amount of calculation required for computation processing of a machine learning model and reduce a load on calculational resources.

[Brief Description of Drawings]

Fig. 1 schematically illustrates an example of a scene to which the present invention is applied.
Fig. 2 schematically illustrates an example of a hardware configuration of a model generation device according to an embodiment.
Fig. 3 schematically illustrates an example of a hardware configuration of an inference device according to the embodiment.
Fig. 4 schematically illustrates an example of a software configuration of the model generation device according to the embodiment.
Fig. 5A illustrates an example of a method of setting a first submatrix and a second submatrix.
Fig. 5B illustrates an example of a scene in which a scaling relationship is recursively established within a 4x4 parameter matrix.
Fig. 5C illustrates an example of generalization of element division when a scaling relationship is recursively established and submatrices of a first row constitute the first submatrix in each stage.
Fig. 6 schematically illustrates an example of a software configuration of the inference device according to the embodiment.
Fig. 7 is a flowchart showing an example of a processing procedure of the model generation device according to the embodiment.
Fig. 8A illustrates an example of a process of computing a parameter matrix (2x2 matrix) in a forward propagation phase.
Fig. 8B illustrates an example of a process of computing a parameter matrix (2x2 matrix) in a backpropagation phase.
Fig. 9A illustrates an example of a process of computing a parameter matrix (4x4 matrix) in a forward propagation phase.
Fig. 9B illustrates an example of a process of computing a parameter matrix (4x4 matrix) in a backpropagation phase.
Fig. 10A illustrates an example of a process of computing a parameter matrix (a matrix having an arbitrary size) in a forward propagation phase.
Fig. 10B illustrates an example of a process of computing a parameter matrix (a matrix having an arbitrary size) in a backpropagation phase.
Fig. 11 is a flowchart showing an example of a processing procedure of the inference device according to the embodiment.
Fig. 12 schematically illustrates an example of another scene to which the present invention is applied.
Fig. 13 schematically illustrates an example of another scene to which the present invention is applied.
Fig. 14 schematically illustrates an example of another scene to which the present invention is applied.

[Description of Embodiments]

Hereinafter, an embodiment according to one aspect of the present invention (hereinafter also referred to as "the present embodiment") will be described based on the drawings. However, the present embodiment to be described below is merely an example of the present invention in every respect. It is needless to say that various modifications and variations can be made without departing from the scope of the invention. That is, a specific configuration according to the embodiment may be appropriately adopted in implementing the present invention. Although data appearing in the present embodiment is described by natural language, more specifically, it is designated in computer-recognizable pseudo-language, commands, parameters, machine language, and the like.

§1 Application Example

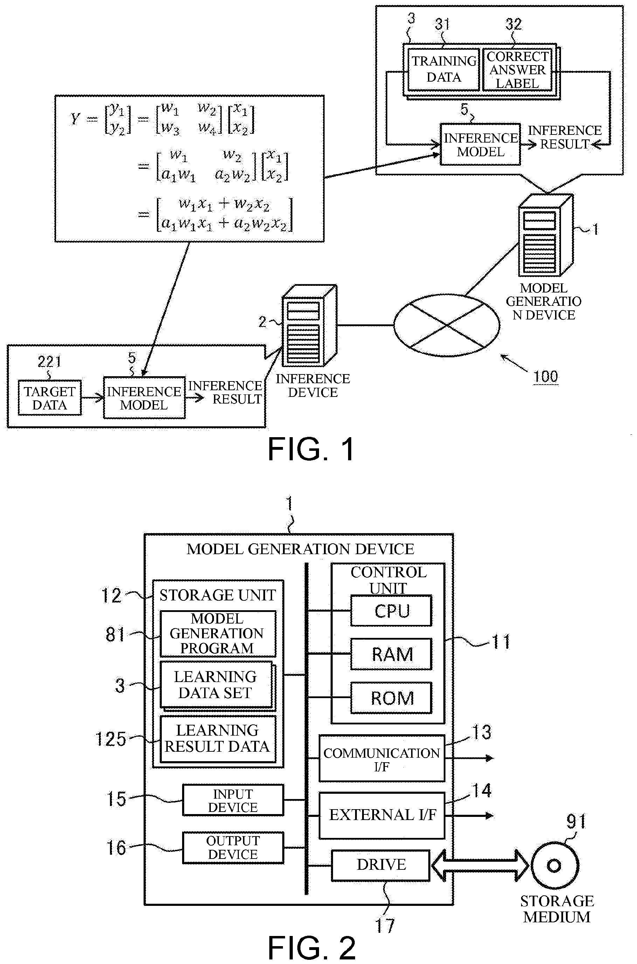

Fig. 1 schematically illustrates an example of a situation in which the present invention is applied. As illustrated in Fig. 1, an inference system 100 according to the present embodiment includes a model generation device 1 and an inference device 2.

The model generation device 1 according to the present embodiment is a computer configured to generate an inference model 5 trained by machine learning. In the present embodiment, the model generation device 1 acquires a plurality of learning data sets 3. Each learning data set 3 is constituted by a combination of training data 31 and a correct answer label 32. The training data 31 may be configured appropriately in accordance with an inference task or the like. The correct answer label 32 is configured to indicate a correct answer (true value) of an inference task for the training data 31.

Any kind of task that infers features included in data may be selected as an inference task of the inference model 5. As an example, when the trained inference model 5 for inspecting appearance based on an image is generated, the inference task is to determine whether a product shown in image data has a defect (tasks such as extraction of the presence or absence of a defect, the type of defect, and a range in which a defect is present may be included). In this case, the training data 31 may be constituted by image data showing the product, and the correct answer label 32 may be configured to indicate a correct answer of the inference task for the associated training data 31 (for example, the presence or absence of a defect, the type of defect, a range in which a defect is present, and the like). The model generation device 1 performs machine learning of the inference model 5 using the plurality of learning data sets 3.

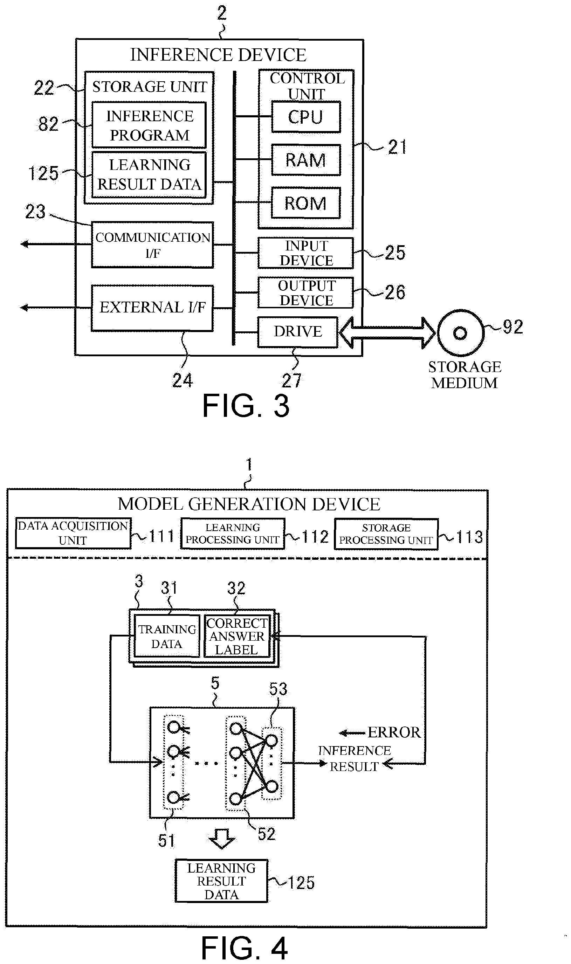

The inference model 5 is constituted by a machine learning model including a plurality of parameters. The type of machine learning model may not be particularly limited, and may be selected appropriately in accordance with an embodiment. For the inference model 5, for example, a neural network, a principal component vector obtained by principal component analysis, a support vector machine, or the like may be adopted. For convenience of description, an example in which a neural network is adopted as a machine learning model constituting the inference model 5 will be shown below (Fig. 4 to be described later). When the inference model 5 is configured by a neural network, weights of connections between neurons (nodes) are examples of parameters.

In the present embodiment, at least some of the parameters of the inference model 5 are configured to be able to be represented by a matrix. The matrix is configured to include a first submatrix and a second submatrix. The first submatrix and the second submatrix are configured such that the number of elements in each row and the number of elements in each column are the same. The number of rows and the number of columns of each submatrix may be selected appropriately in accordance with an embodiment. The number of rows and the number of columns may be the same or different from each other. The first submatrix and the second submatrix may be scalars ($1 \times 1$ matrices).

Machine learning is configured for each learning data set 3 by training the inference model 5 so that a result of performing an inference task on the training data 31 by using the inference model 5 conforms to a correct answer indicated by the correct answer label 32 and the value of each element of the second submatrix is adjusted to match the product of the first submatrix and a diagonal matrix. Thereby, it is possible to generate the trained inference model 5 that has acquired the ability to perform an inference task and that has been adjusted such that the value of each element of the second submatrix matches the product of the first submatrix and the diagonal matrix.

In the example of Fig. 1, $w_1$ to $w_4$ are examples of parameters represented by a matrix. Among these, $w_1$ and $w_2$ are examples of first submatrices. $w_3$ and $w_4$ are examples of second submatrices. $(y_1, y_2)$ indicates a computation result (output) of a component represented by this matrix in the inference model 5. $(x_1, x_2)$ denotes an input to this component. As an example, when each layer constituting a neural network is represented by the above-described matrix, an input to each layer corresponds to $(x_1, x_2)$, and an output from each layer corresponds to $(y_1, y_2)$. $(a_1, a_2)$ is an example of elements of diagonal components of a diagonal matrix. When the values of the elements of the diagonal component of the diagonal matrix are the same, the diagonal matrix may be represented by one value (scalar).

On the other hand, the inference device 2 according to the present embodiment is a computer configured to perform an inference task using a trained inference model 5. In the present embodiment, the inference device 2 acquires target data 221. Next, the inference device 2 performs an inference task on the acquired target data 221 by using the inference model 5 trained by machine learning. As described above, at least some of the parameters of the inference model 5 are represented by a matrix. The matrix includes a first submatrix and a second submatrix. The numbers of elements in each row and each column of the first submatrix and the second submatrix are the same. The value of each element of the second submatrix is adjusted to match the product of the first submatrix and a diagonal matrix. The inference device 2 outputs information on a result of performing the inference task.

As described above, in the present embodiment, at least some of the parameters of the inference model 5 can be represented by a matrix including a first submatrix and a second submatrix. According to the model generation device 1 according to the present embodiment, in the trained inference model 5, the value of each element of the second submatrix is adjusted to match the product of the first submatrix and the diagonal matrix. For this reason, even when the information on the second submatrix is not stored, a computation result of the first submatrix can be reused to obtain a computation result of the second submatrix. In the example of Fig. 1, a computation result of the second submatrix ($a_1 w_1 x_1$ and $a_2 w_2 x_2$) can be obtained from a computation result of the first submatrix ($w_1 x_1$ and $w_2 x_2$) without executing computation of $w_3 x_1$ and $w_4 x_2$. Thus, according to the present embodiment, the number of parameters constituting the inference model 5 can be substantially reduced. Specifically, the number of parameters can be reduced by a difference between the number of elements of the second submatrix and the number of elements of the diagonal matrix other than 0. Thereby, it is possible to reduce the amount of calculation required for computation processing of the inference model 5 and reduce a load on calculational resources.

In the example of Fig. 1, the model generation device 1 and the inference device 2 are connected to each other via a network. The type of network may be selected appropriately from among, for example, the Internet, a wireless communication network, a mobile communication network, a telephone network, a dedicated network, and the like. However, a method of exchanging data between the model generation device 1 and the inference device 2 may not be limited to such an example, and may be selected appropriately in accordance with an embodiment. For example, data may be exchanged between the model generation device 1 and the inference device 2 using a storage medium.

In the example of Fig. 1, the model generation device 1 and the inference device 2 are constituted by separate computers. However, the configuration of the inference system 100 according to the present embodiment may not be limited to such an example, and may be determined appropriately in accordance with an embodiment. For example, the model generation device 1 and the inference device 2 may be an integrated computer. For example, at least one of the model generation device 1 and the inference device 2 may be constituted by a plurality of computers.

§2 Configuration Example

[Hardware Configuration]

<Model Generation Device>

Fig. 2 schematically illustrates an example of a hardware configuration of the model generation device 1 according to the present embodiment. As illustrated in Fig. 2, the model generation device 1 according to the present embodiment is a computer in which a control unit 11, a storage unit 12, a communication interface 13, an external interface 14, an input device 15, an output device 16, and a drive 17 are electrically connected to each other. In Fig. 2, the communication interface and the external interface are described as a "communication I/F" and an "external I/F."

The control unit 11 includes a central processing unit (CPU) which is a hardware processor, a random access memory (RAM), a read only memory (ROM), and the like, and is configured to execute information processing based on programs and various data. The storage unit 12 is an example of a memory, and is constituted by, for example, a hard disk drive, a solid state drive, or the like. In the present embodiment, the storage unit 12 stores various types of information such as a model generation program 81, a plurality of learning data sets 3, learning result data 125, and the like.

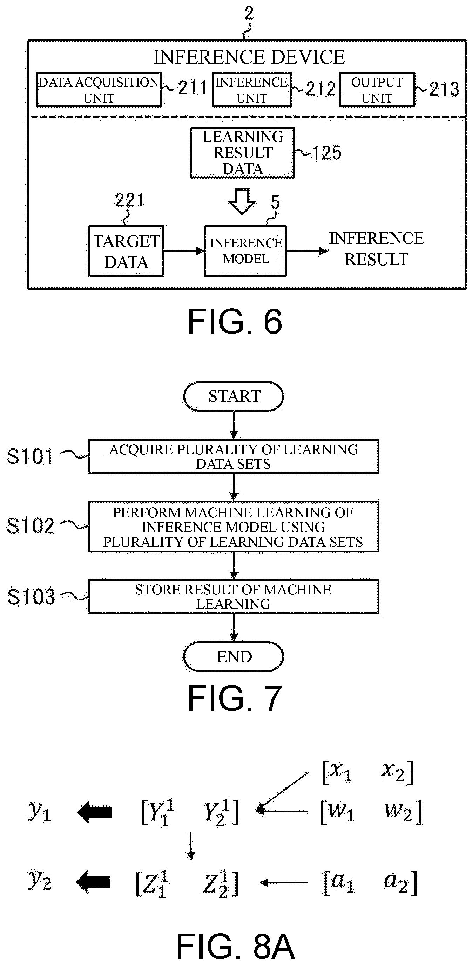

The model generation program 81 is a program for causing the model generation device 1 to execute information processing (Fig. 7) of machine learning for generating a trained inference model 5, which will be described later. The model generation program 81 includes a series of instructions for the information processing. The plurality of learning data sets 3 are used to generate the trained inference model 5. The learning result data 125 indicates information on the generated trained inference model 5. In the present embodiment, the learning result data 125 is generated as a result of executing the model generation program 81. Details will be described later.

The communication interface 13 is, for example, a wired local area network (LAN) module, a wireless LAN module, or the like, and is an interface for performing wired or wireless communication via a network. The model generation device 1 can perform data communication with other information processing devices via a network by using the communication interface 13. The external interface 14 is, for example, a universal serial bus (USB) port, a dedicated port, or the like, and is an interface for connecting with an external device. The type and number of external interfaces 14 may be arbitrarily selected. The model generation device 1 may be connected to a device for obtaining the training data 31 (for example, a camera when the training data 31 is image data) via at least one of the communication interface 13 and the external interface 14.

The input device 15 is, for example, a device for performing input such as a mouse and a keyboard. The output device 16 is, for example, a device for performing output such as a display and a speaker. An operator such as a user can operate the model generation device 1 by using the input device 15 and the output device 16.

The drive 17 is, for example, a CD drive, a DVD drive, or the like, and is a drive device for reading various information such as programs stored in a storage medium 91. The storage medium 91 is a medium that stores information such as programs by an electrical, magnetic, optical, mechanical or chemical action so that computers, other devices, machines, or the like can read stored various information such as programs. At least one of the model generation program 81 and the plurality of learning data sets 3 may be stored in the storage medium 91. The model generation device 1 may acquire at least one of the model generation program 81 and the plurality of learning data sets 3 from the storage medium 91. In Fig. 2, as an example of the storage medium 91, a disk-type storage medium such as a CD or a DVD is illustrated. However, the type of storage medium 91 is not limited to a disk type, and may be a type other than the disk type. As a storage medium other than the disk type, for example, a semiconductor memory such as a flash memory can be cited. The type of drive 17 may be arbitrarily selected in accordance with the type of storage medium 91.

Regarding a specific hardware configuration of the model generation device 1, it is possible to omit, replace, and add components appropriately in accordance with an embodiment. For example, the control unit 11 may include a plurality of hardware processors. The hardware processors may be constituted by a microprocessor, a field-programmable gate array (FPGA), a digital signal processor (DSP), or the like. The storage unit 12 may be constituted by a RAM and a ROM included in the control unit 11. At least one of the communication interface 13, the external interface 14, the input device 15, the output device 16, and the drive 17 may be omitted. The model generation device 1 may be constituted by a plurality of computers. In this case, the hardware configurations of the computers may or may not match each other. The model generation device 1 may be an information processing device designed exclusively for a service provided, or may be a general-purpose server device, a personal computer (PC), an industrial PC (IPC), or the like.

<Inference Device>

Fig. 3 schematically illustrates an example of a hardware configuration of the inference device 2 according to the present embodiment. As illustrated in Fig. 3, the inference device 2 according to the present embodiment is a computer in which a control unit 21, a storage unit 22, a communication interface 23, an external interface 24, an input device 25, an output device 26, and a drive 27 are electrically connected to each other.

The control unit 21 to the drive 27 and a storage medium 92 of the inference device 2 may be configured similarly to the control units 11 to the drive 17 and the storage medium 91 of the model generation device 1, respectively. The control unit 21 includes a CPU which is a hardware processor, a RAM, a ROM, and the like and is configured to execute various types of information processing based on programs and data. The storage unit 22 is constituted by, for example, a hard disk drive, a solid state drive, or the like. In the present embodiment, the storage unit 22 stores various information such as an inference program 82 and learning result data 125.

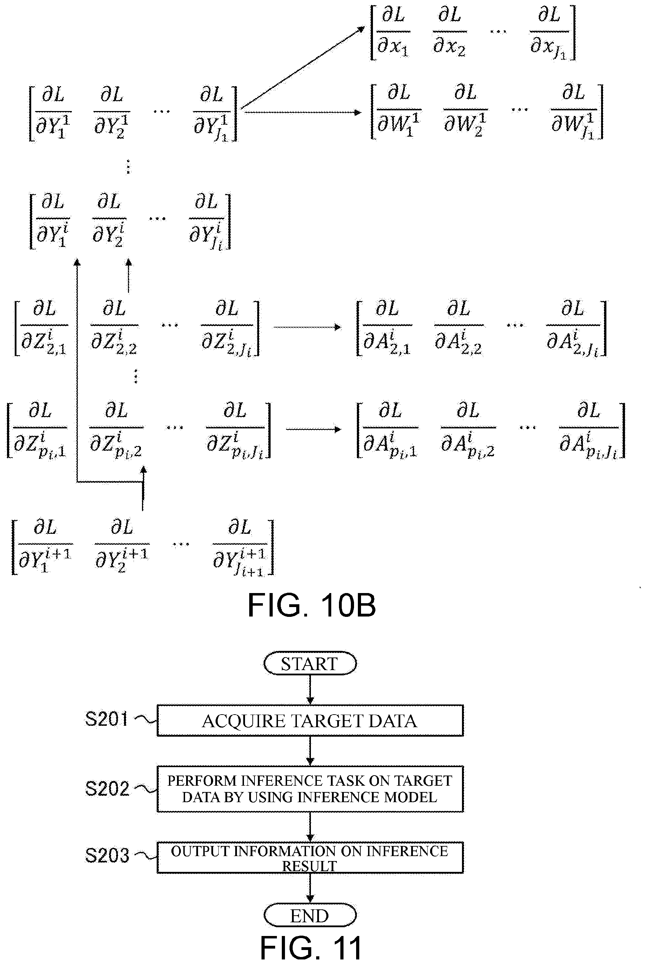

The inference program 82 is a program for causing the inference device 2 to execute information processing (Fig. 11), which is to be described later, for performing an inference task using a trained inference model 5. The inference program 82 includes a series of instructions for the information processing. At least one of the inference program 82 and the learning result data 125 may be stored in the storage medium 92. The inference device 2 may acquire at least one of the inference program 82 and the learning result data 125 from the storage medium 92.

The inference device 2 may be connected to a device (a sensor, another computer, or the like) for acquiring the target data 221 via at least one of the communication interface 23 and the external interface 24. The inference device 2 may receive operations and inputs from an operator such as a user by using the input device 25 and the output device 26.

Regarding a specific hardware configuration of the inference device 2, it is possible to omit, replace, or add components appropriately in accordance with an embodiment. For example, the control unit 21 may include a plurality of hardware processors. The hardware processors may be constituted by a microprocessor, an FPGA, a DSP, or the like. The storage unit 22 may be constituted by a RAM and a ROM included in the control unit 21. At least one of the communication interface 23, the external interface 24, the input device 25, the output device 26, and the drive 27 may be omitted. The inference device 2 may be constituted by a plurality of computers. In this case, the hardware configurations of the computers may or may not match each other. The inference device 2 may be an information processing device designed exclusively for a service provided, or may be a general-purpose server device, a general-purpose PC, an industrial PC, a programmable logic controller (PLC), or the like.

[Software Configuration]

<Model Generation Device>

Fig. 4 schematically illustrates an example of a software configuration of the model generation device 1 according to the present embodiment. The control unit 11 of the model generation device 1 decompresses the model generation program 81 stored in the storage unit 12 in the RAM. Then, the control unit 11 causes the CPU to interpret and execute instructions included in the model generation program 81 decompressed in the RAM to control each component. Thereby, as illustrated in Fig. 4, the model generation device 1 according to the present embodiment operates as a computer including a data acquisition unit 111, a learning processing unit 112, and a storage processing unit 113 as software modules. That is, in the present embodiment, each software module of the model generation device 1 is implemented by the control unit 11 (CPU).

The data acquisition unit 111 is configured to acquire a plurality of learning data sets 3. Each learning data set 3 is constituted by a combination of training data 31 and a correct answer label 32. The training data 31 may be configured appropriately in accordance with an inference task or the like. The correct answer label 32 is configured to indicate a correct answer (true value) of an inference task for the training data 31.

The learning processing unit 112 is configured to perform machine learning of the inference model 5 by using a plurality of learning data sets 3. The inference model 5 is constituted by a machine learning model including a plurality of parameters. As long as at least some of the parameters of the inference model 5 can be represented by a matrix, the type of inference model 5 is not particularly limited and may be selected appropriately in accordance with an embodiment.

In the present embodiment, at least some of the parameters of the inference model 5 are configured to be able to be represented by a matrix. The matrix (hereinafter also referred to as a parameter matrix) is configured to include a first submatrix and a second submatrix. The first submatrix and the second submatrix are configured such that the number of elements in each row and the number of elements in each column are the same. Machine learning is configured for each learning data set 3 by training the inference model 5 so that a result of performing an inference task on the training data 31 by using the inference model 5 conforms to a correct answer indicated by the correct answer label 32 and the value of each element of the second submatrix is adjusted to match the product of the first submatrix and a diagonal matrix.

The storage processing unit 113 is configured to generate information on the trained inference model 5 generated by machine learning as learning result data 125 and to store the generated learning result data 125 in a predetermined storage area. The learning result data 125 may be appropriately configured to include information for reproducing the trained inference model 5.

(Inference Model)

As illustrated in Fig. 4, an example of the inference model 5 may be constituted by a neural network. In the example of Fig. 4, the neural network that constitutes the inference model 5 includes an input layer 51, one or more intermediate (hidden) layers 52, and an output layer 53. The number of intermediate layers 52 may be determined appropriately in accordance with an embodiment. Each of the layers 51 to 53 includes one or more neurons (nodes). The number of neurons included in each of the layers 51 to 53 may be determined appropriately in accordance with an embodiment. A connection relationship between the neurons included in each of the layers 51 to 53 may be determined appropriately in accordance with an embodiment. In one example, the neurons included in each of the layers 51 to 53 may be connected to all neurons in the adjacent layers. Thereby, the inference model 5 may be constituted by a fully-connected neural network.

A weight (connection weight) is set for each of connections of the layers 51 to 53. A threshold value is set for each neuron, and basically the output of each neuron is determined depending on whether the sum of products of inputs and weights exceeds the threshold value. The threshold value may be represented by an activation function. In this case, the output of each neuron is determined by inputting the sum of products of inputs and weights into the activation function and executing the computation of the activation function. The type of activation function may be chosen arbitrarily. Weights of connections between neurons included in the layers 51 to 53 are examples of parameters of the inference model 5. That is, when the inference model 5 is constituted by a neural network, elements of a parameter matrix may be configured to correspond to weights of connections between neurons in the neural network.

When the inference model 5 is constituted by the neural network illustrated in Fig. 4, the parameters of the layers 51 to 53 can be represented by separate matrices. In this case, at least a portion of at least one of the layers 51 to 53 constituting the neural network may be constituted by a parameter matrix including a first submatrix and a second submatrix in accordance with results of machine learning. In one example, the layers 51 to 53 may be constituted by different parameter matrices. At this time, $(x_1, x_2)$ mentioned above in each parameter matrix corresponds to input data for each of the layers 51 to 53, and $(y_1, y_2)$ mentioned above corresponds to a computation result (output) of each of the layers 51 to 53.

In machine learning, the learning processing unit 112 uses the training data 31 in each learning data set 3 as input data and uses the correct answer label 32 as a teacher signal. That is, the learning processing unit 112 inputs the training data 31 in each learning data set 3 to the input layer 51 and executes computation processing of forward propagation of the inference model 5 (forward propagation phase). As a result of this computation processing of forward propagation, the learning processing unit 112 acquires an output value corresponding to a result of performing an inference task on the training data 31 (that is, a result of inferring a solution of the inference task) from the output layer 53. The format of the output value obtained from the output layer 53 is not particularly limited as long as an inference result can be specified, and may be determined appropriately in accordance with an embodiment. In one example, the output value of output layer 53 may be configured to directly indicate an inference result. In another example, the output value of the output layer 53 may be configured to indirectly indicate an inference result by going through arbitrary computation processing such as threshold processing.

The learning processing unit 112 calculates an error between the obtained result of performing the inference task and the correct answer label 32 associated with the input training data 31, and further calculates a gradient of the calculated error. Then, the learning processing unit 112 backpropagates of the calculated error gradient using an error backpropagation method to adjust the value of each parameter (backpropagation phase). During this adjustment, the learning processing unit 112 adjusts the value of each element of the second submatrix to match the product of the first submatrix and a diagonal matrix. For each learning data set 3, the learning processing unit 112 repeats the above-described series of processing for adjusting the value of each parameter so that the sum of the calculated errors is decreased. As a result of the machine learning, it is possible to generate the trained inference model 5 that has acquired the ability to perform an inference task and that has been adjusted such that the value of each element of the second submatrix matches the product of the first submatrix and the diagonal matrix.

The storage processing unit 113 generates learning result data 125 for reproducing the trained inference model 5 generated by the machine learning. The configuration of the learning result data 125 is not particularly limited as long as the trained inference model 5 can be reproduced, and may be determined appropriately in accordance with an embodiment. As an example, the learning result data 125 may include information indicating the value of each parameter obtained by adjustment of the machine learning. At this time, the value of each element of the second submatrix matches the product of the first submatrix and a diagonal matrix, and thus information indicating the values of the parameters constituting the second submatrix can be omitted. That is, the learning result data 125 may be configured to include information indicating the values of the parameters constituting the first submatrix obtained by the adjustment of the machine learning and the values of diagonal components of the diagonal matrix. Depending on the case, the learning result data 125 may further include information indicating the structure of the inference model 5. The structure may be specified, for example, by the number of layers from the input layer to the output layer, the type of each layer, the number of neurons included in each layer, a connection relationship between neurons in the adjacent layers, and the like. The storage processing unit 113 stores the generated learning result data 125 in a predetermined storage area.

(Relationship Between First Submatrix and Second Submatrix)

Here, an example of a relationship between a first submatrix and a second submatrix will be described. In the present embodiment, when some of elements of a parameter matrix correspond to the first submatrix and at least some of the remaining elements correspond to the second submatrix (that is, when a proportional relationship is established in at least a portion of the parameter matrix of the trained inference model 5), the effect of reducing the number of parameters can be obtained. For this reason, it is sufficient that the proportional relationship is established in at least a portion of the parameter matrix. However, in order to effectively reduce the number of parameters, it is preferable that a range corresponding to the first submatrix and the second submatrix (particularly, the second submatrix) be wide in the parameter matrix.

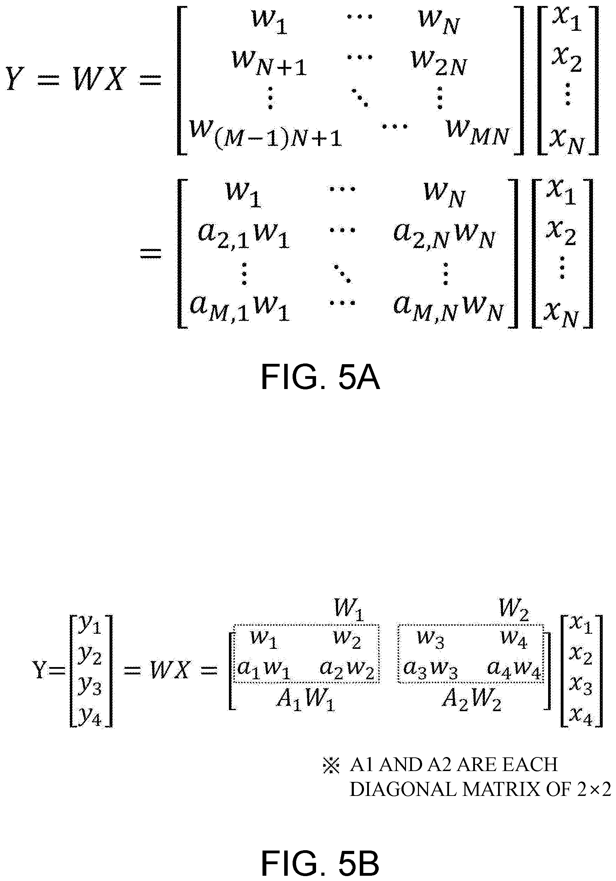

Fig. 5A illustrates an example of a method of setting a first submatrix and a second submatrix for effectively reducing the number of parameters. In this setting method, the first submatrix and the second submatrix are set such that a scaling relationship defined by the following conditions (1) to (3) is established in at least a portion of a parameter matrix.

> · Condition (1): At least a portion of the parameter matrix is divided into M × N submatrices such that M rows and N columns are arranged in each of the submatrices having the same number of elements in each row and the same number of elements in each column.
> · Condition (2): In each column, a submatrix disposed in any row constitutes the first submatrix corresponding to submatrices disposed in rows other than the any row.
> · Condition (3): Submatrices disposed in other rows constitute the second submatrix.

In the example of Fig. 5A, W corresponds to at least a portion of the parameter matrix, X corresponds to input data for the portion, and Y corresponds to a computation result (output) for the portion, $w_1$ to $w_{MN}$ correspond to M × N submatrices. The number of elements in each row and the number of elements in each column in each of the submatrices $w_1$ to $w_{MN}$ are not particularly limited as long as they are the same among the submatrices $w_1$ to $w_{MN}$, and may be determined appropriately in the embodiment. The submatrices $w_1$ to $w_{MN}$ may be a 1×1 matrix (scalar). The number of elements of inputs ($x_1$ to $x_N$) corresponds to the number of elements of the columns of the submatrices $w_1$ to $w_{MN}$.

In the example of Fig. 5A, among the submatrices $w_1$ to $w_{MN}$, submatrices $w_1$ to $w_N$ in a first row constitute a first submatrix for submatrices in the other rows (second and subsequent rows) in each column. The remaining submatrices $w_{N+1}$ to $w_{MN}$ constitute a second submatrix for submatrices (first submatrix) of a first row in the column. That is, submatrices $w_t$ of the first row constitute the first submatrix for submatrices $w_{rN+t}$ of the second and subsequent rows, and the submatrices $w_{rN+t}$ constitute the second submatrix of the submatrices $w_t$ (t is a natural number from 1 to N, and r is a natural number from 1 to M-1). $a_{2,1}$ to $a_{M,N}$ are diagonal matrices. The number of elements of $a_{2,1}$ to $a_{M,N}$ corresponds to the number of elements of the rows of the submatrices $w_1$ to $w_N$.

The values of M and N are not particularly limited as long as they are natural numbers of 2 or more, and may be determined appropriately in accordance with an embodiment. In one example, M and N may be the same prime number S. As a specific example, M and N may be 2 (the example of Fig. 1). In this case, at least some rows and some columns of a parameter matrix are divided into two parts, and it is possible to easily grasp submatrices corresponding to a first submatrix and a second submatrix. In another example, M and N may be different values.

In the example of Fig. 5A, submatrices disposed in first rows of respective columns constitute a first submatrix for submatrices disposed in the other rows of the respective column (second and subsequent rows), and submatrices disposed in second and subsequent rows of the respective columns constitute a second submatrix. However, the arrangement of the first submatrix and the second submatrix may not be limited to such an example. In each column, a first submatrix may be disposed in any one row among second and subsequent rows. In the example of Fig. 5A, submatrices in the same rows of the respective columns constitute a first submatrix, but the arrangement of the first submatrix may not be limited to such an example. That is, the rows in which the submatrices constituting the first submatrix are disposed may be different between the columns (for example, in the first column, the submatrices of the first rows constitutes a first submatrix, on the other hand, in the second column, submatrices of any one row among the second and subsequent rows may constitute a first submatrix).

In order to further effectively reduce the number of parameters, the scaling relationship may be recursively established within at least a portion of the parameter matrix (that is, the scaling relationship may be further established within each submatrix). The number of times the scaling relationship is recursively established may not be particularly limited, and may be determined appropriately in accordance with an embodiment. Establishing the scaling relationship may be repeated until each submatrix becomes a matrix having an arbitrary size. In this case, the matrix having an arbitrary size may be referred to as a "unit matrix". However, in order to more effectively reduce the number of parameters, it is desirable that the scaling relationship be recursively established until the establishment of the scaling relationship within the submatrices constituting the first submatrix is repeated until each submatrix becomes a 1×1 matrix (scalar). Thereby, it is possible to effectively reduce the amount of calculation required for the computation processing of the inference model 5 and reduce a load on calculational resources.

Fig. 5B illustrates an example of a scene in which a scaling relationship is recursively established until each submatrix becomes a 1×1 matrix in a 4 × 4 parameter matrix. First, a 4 × 4 parameter matrix W is divided into 2 × 2 submatrices (a size of 2 × 2). Among these, $W_1$ and $W_2$ in first rows of respective columns constitute a first submatrix, and submatrices in second rows of the respective columns constitute a second submatrix. $A_1$ and $A_2$ (a size of 2 × 2) are diagonal matrices used in this stage. Thereby, a scaling relationship is established within a 4 × 4 parameter matrix. Each first submatrix ($W_1$, $W_2$) is further divided into 2 × 2 submatrices (a size of 1×1). Among these, submatrices ($w_1$ to $w_4$) of first rows of respective columns in each submatrix constitutes a first submatrix, and submatrices of second rows of the respective columns constitute a second submatrix. $a_1$ to $a_4$ (a size of 1×1) are diagonal matrices used in this stage. In each first submatrix ($W_1$, $W_2$), a scaling relationship is further established. As for information on the diagonal matrices, it is sufficient to store only diagonal components. For this reason, in the example of Fig. 5B, 16 parameters in W can be reduced to 12 parameters ($w_1$ to $w_4$, $a_1$ to $a_4$, $A_1$, $A_2$).

In the example of Fig. 5B, the scaling relationship is recursively established in two stages, and the number of divisions M × N in each stage is the same (2 × 2). However, the number of times the scaling relationship is recursively established may not be limited to such an example, and may be determined appropriately in accordance with an embodiment. The number of divisions M × N in each stage may be different at least partially. For example, at least one of $M_i$ and $N_i$ may be different between the number of divisions $M_1 × N_1$ in the first stage and the number of divisions $M_2 × N_2$ in the second stage.

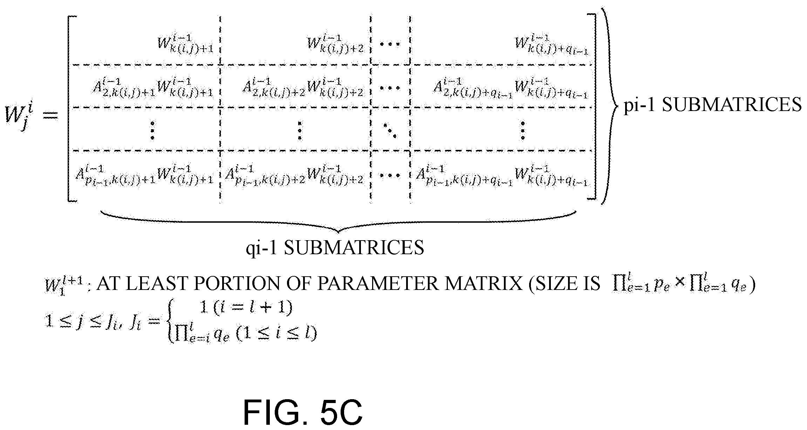

Fig. 5C illustrates an example of generalization of element division when a scaling relationship is recursively established and submatrices in first rows constitute a first submatrix in each stage. $W_j^i$ is divided into $p_{i-1} × q_{i-1}$ submatrices (also referred to as small matrices), and assuming that the submatrices in the first rows constitute the first submatrix in each stage, small matrices within the matrix $W_j^i$ in each stage can be expressed by an equation in Fig. 5C. i corresponds to the stage of recursion. A natural number from 1 to l+1 is substituted for i. The element division in Fig. 5C is established when i ranges from 2 to l+1. 1 indicates the number of times a scaling relationship is recursively established. j corresponds to the number of a column in which the corresponding matrix is disposed in each stage. A natural number from 1 to $J_i$ is substituted for j. $J_i$ is represented by Equation 1 below.

[Math. 1]

$$J_i = \begin{cases} \mathbf{1} \; (\boldsymbol{i = l + 1}) \\ \prod_{e=i}^l \boldsymbol{q_e} \; (\mathbf{1} \le \boldsymbol{i} \le \boldsymbol{l}) \end{cases}$$

...(Equation 1)

$W_1^{l+1}$ corresponds to at least a portion of a parameter matrix before elements are divided by a scaling relationship (that is, a portion of the parameter matrix in which the scaling relationship is recursively established). $W_1^1$ to $W_j^1$ corresponds to a first submatrix in each stage. $k(i,j)$ ($=q_{i-1} \times (j-1)$) indicates an offset for displaying small matrices in the matrix $W_j^i$ with consecutive numbers between other matrices (for example, $W_{j-1}^i$) in the same stage. $A_g^{i-1}$ is a diagonal matrix having a size $M_{i-1} \times M_{i-1}$. g is $(2,k(i,j)+1)-(p_{i-1},k(i,j)+q_{i-1})$. In a relationship with the number of elements one stage before, the number of elements $M_i$ in the row of $W_j^i$ can be expressed as $M_{i+1}/p_i$, and the number of elements $N_i$ in the column of $W_j^i$ can be expressed as $N_{i+1}/q_i$. $W_j^1$ in the final division may be a $1 \times 1$ matrix (scalar). In this case, the number of elements in the row of $W_1^{l+1}$ is $p_1 \times ... \times p_1$, and the number of elements in the column of $W_1^{l+1}$ is $q_1 \times ... \times q_1$. When the scaling relationship is established recursively in this manner, the trained inference model 5 is reproduced by storing information of $W_j^1$ in the final division and diagonal matrices $A_g^1$ to $A_g^1$ in each stage as learning result data 125, whereby it is possible to execute computation processing of at least a portion of the parameter matrix. That is, the number of parameters of at least part of the parameter matrix can be reduced from $p_1 \times ... \times p_1 \times q_1 \times ... \times q_1$ to $W_j^1$ and the number of elements of the diagonal matrices $A_g^1$ to $A_g^1$ in each stage.

$p_{i-1}$ and $q_{i-1}$ in each stage correspond to the numbers of divisions M and N in each stage. The values of $p_{i-1}$ and $q_{i-1}$ are not particularly limited and may be determined appropriately in accordance with an embodiment. The number of divisions in each stage may be the same or different between stages. The values of $p_{i-1}$ and $q_{i-1}$ may be the same or different from each other. As an example, $p_{i-1}$ and $q_{i-1}$ may be the same prime number S, and the number of divisions may be the same between the stages. For example, the prime number S may be 2. In this case, at least a portion ($W_1^{1+1}$) of the parameter matrix is constituted by a square matrix of which the number of elements is the power ($S^{21}$) of the prime number S. Thereby, the submatrices corresponding to the first submatrix and the second submatrix can be easily grasped.

In the following, for convenience of description, it is assumed that submatrices constituting a first submatrix of each column in each stage are disposed in a fist row, and submatrices of second and subsequent rows constitute a second submatrix. However, the submatrices constituting the first submatrix of each column in each stage does may not be limited to being disposed in the first row. The first submatrix of each column in each stage may be disposed in any one of the second and subsequent rows. The arrangement of the first submatrix in each column may be the same or different between the stages. $W_j^1$ in the final division is not limited to a $1 \times 1$ matrix. In another example, $W_j^1$ in the final division can be a matrix having an arbitrary size.

<Inference Device>

Fig. 6 schematically illustrates an example of a software configuration of the inference device 2 according to the present embodiment. The control unit 21 of the inference device 2 decompresses the inference program 82 stored in the storage unit 22 in the RAM. Then, the control unit 21 causes the CPU to interpret and execute instructions included in the inference program 82 decompressed in the RAM to control each component. Thereby, as illustrated in Fig. 6, the inference device 2 according to the present embodiment operates as a computer including a data acquisition unit 211, an inference unit 212, and an output unit 213 as software modules. That is, in the present embodiment, each software module of the inference device 2 is implemented by the control unit 21 (CPU) similar to the model generation device 1.

The data acquisition unit 211 is configured to acquire target data 221. The inference unit 212 includes an inference model 5 trained by machine learning by storing the learning result data 125. The inference unit 212 is configured to perform an inference task on the acquired target data 221 by using the trained inference model 5. The output unit 213 is configured to output information on a result of performing the inference task.

<Others>

The software modules of the model generation device 1 and the inference device 2 will be described in detail in operation examples to be described later. In the present embodiment, an example in which both the software modules of the model generation device 1 and the inference device 2 are implemented by a general-purpose CPU has been described. However, some or all of the software modules may be implemented by one or more dedicated processors (for example, graphics processing units). Each module described above may be implemented as a hardware module. With respect to the software configurations of the model generation device 1 and the inference device 2, software modules may be omitted, replaced, or added appropriately in accordance with an embodiment.

§3 Operation Example

[Model Generation Device]

Fig. 7 is a flowchart showing an example of a processing procedure regarding machine learning of the model generation device 1 according to the present embodiment. The processing procedure of the model generation device 1 to be described below is an example of a model generation method. However, the processing procedure of the model generation device 1 to be described below is merely an example, and each step may be changed as far as possible. In the following processing procedure, steps may be omitted, replaced, or added appropriately in accordance with an embodiment.

(Step S101)

In step S101, the control unit 11 operates as the data acquisition unit 111, and acquires a plurality of learning data sets 3 each constituted by a combination of training data 31 and a correct answer label 32 indicating a correct answer to an inference task for the training data 31.

The learning data sets 3 may be appropriately generated. For example, the training data 31 (training sample) can be acquired by assuming an environment in which an inference task is performed in a real space or a virtual space and observing any target in the environment. An observation target may be selected appropriately in accordance with an inference task. Any sensor may be used to acquire the training data 31. As an example, when the inference task is appearance inspection of a product, the training data 31 can be acquired by imaging a product with or without a defect by a camera. Next, information indicating a result (correct answer/true value) of performing an inference task on the acquired training data 31 is acquired as the correct answer label 32. In this scene, the inference task may be performed manually by an operator or the like. Then, the obtained correct answer label 32 is associated with the training data 31. Thereby, the learning data sets 3 can be generated.

The learning data sets 3 may be generated automatically by the operation of a computer, or may be generated manually by including at least a portion of an the operator's operation. The learning data sets 3 may be generated by the model generation device 1 or may be generated by a computer other than the model generation device 1. When the model generation device 1 generates the learning data sets 3, the control unit 11 executes the above-described series of generation processing automatically or manually by the operator's operation through the input device 15 to acquire the plurality of learning data sets 3. On the other hand, when the learning data sets 3 are generated by another computer, the control unit 11 acquires the plurality of learning data sets 3 generated by the other computer, for example, through a network, the storage medium 91, or the like. Some of the learning data sets 3 may be generated by the model generation device 1, and the other learning data sets 3 may be generated by one or a plurality of other computers.

The number of learning data sets 3 to be acquired may be arbitrarily selected. When the plurality of learning data sets 3 are acquired, the control unit 11 causes the processing to proceed to the next step S102.

(Step S102)

In step S102, the control unit 11 operates as the learning processing unit 112 and performs machine learning of the inference model 5 by using the plurality of learning data sets 3. In the present embodiment, machine learning is configured for each learning data set 3 by training the inference model 5 so that a result of performing an inference task on the training data 31 by using the inference model 5 conforms to a correct answer indicated by the correct answer label 32 and the value of each element of the second submatrix is adjusted to match the product of the first submatrix and a diagonal matrix.

When the trained inference model 5 that satisfies a scaling relationship is generated, training the inference model 5 includes adjusting the values of elements of at least a portion of a parameter matrix so that the scaling relationship is established. When a trained inference model 5 in which the above-described scaling relationship is recursively established is generated, the training of the inference model 5 includes adjusting the values of elements of at least a portion of a parameter matrix so that the scaling relationship is recursively established within at least a portion of the parameter matrix by repetition of establishment of a scaling relationship in the submatrices constituting the first submatrix. The recursive establishment of the scaling relationship may be repeated until each submatrix becomes a $1 \times 1$ matrix (scalar). That is, the first submatrix ($W_j^1$) obtained by the final division according to the scaling relationship may be a $1 \times 1$ matrix. A machine learning method may be selected appropriately in accordance with the type of machine learning model that constitutes the inference model 5.

In one example, training the inference model 5 (adjusting the values of the elements of at least a portion of the parameter matrix) includes:

· performing initialization setting of the inference model 5 (giving initial values to parameters);
· deriving results of performing an inference task on the training data 31 of the learning data sets 3 on a trial basis in a forward propagation phase; and
· adjusting values of parameters (elements of at least a portion of a parameter matrix and elements of a diagonal matrix) of the inference model 5 by backpropagating a gradient of an error between the derived result of performing the inference task and a correct answer indicated by the correct answer label 32 in a backpropagation phase.

(Initial Setting)

First, the control unit 11 performs initialization setting of the inference model 5 to be subjected to machine learning processing. In the present embodiment, regarding the control unit 11, the structure of a neural network (for example, the number of layers, the type of each layer, the number of neurons included in each layer, a connection relationship between neurons in adjacent layers, or the like) and initial values of weights of connections between neurons may be given by a template or may be given by an operator's input. When re-learning is performed, the control unit 11 may perform initial setting of the neural network based on learning result data obtained by past machine learning.

In the present embodiment, elements of a parameter matrix correspond to weights of connections between neurons. For this reason, giving initial values of weights of connections between neurons corresponds to giving initial values of elements of a parameter matrix. Since a second submatrix is represented by a product of a first submatrix and a diagonal matrix, giving initial values of elements corresponding to the second submatrix may be omitted. In other words, giving the initial values of the weights of the connections between the neurons may be configured by giving initial values of elements corresponding to the first submatrix and diagonal components of the diagonal matrix.

When a trained inference model 5 in which a scaling relationship is recursively established is generated, the control unit 11 gives initial values of elements of at least a portion of a parameter matrix so that the scaling relationship is recursively established. As a specific example, the control unit 11 gives elements of $W_j^1$ constituting a first submatrix in the final division (that is, a scaling relationship that is finally established) and elements of a diagonal matrix used in each stage.

(Forward Propagation Phase)

Next, in a forward propagation phase, the control unit 11 inputs training data 31 of each learning data set 3 to the input layer 51 and executes computation processing of forward propagation of the inference model 5. When the computation processing of the forward propagation is performed, first, the control unit 11 calculates products of submatrices constituting a first submatrix and input vectors. When a parameter matrix corresponds to the input layer 51, the input vectors are the training data 31 of the learning data sets 3. When the parameter matrix corresponds to the intermediate layer 52 or the output layer 53, an input vector is a calculation result (output) of a layer before the corresponding layer. Next, the control unit 11 calculates products of results of the products of the first submatrix and the corresponding elements of the diagonal matrix, thereby deriving products of submatrices constituting a second submatrix and input vectors. That is, the control unit 11 multiplies the results of the products of the first submatrix and the diagonal matrix, and acquires calculation results obtained by the multiplication as results of products of the second submatrix and the input vectors.

When a trained inference model 5 in which a scaling relationship is recursively established is generated, computation of a forward propagation phase may include computations of the following first to fifth steps.

· The first step: In at least a portion of a parameter matrix in which a scaling relationship is recursively established, products of submatrices constituting an initial first submatrix and input vectors are calculated
· The second step: Products of results of the obtained products of the initial first submatrix and corresponding elements of a diagonal matrix are calculated to derive products of submatrices constituting an initial second submatrix and input vectors
· The third step: Products of submatrices constituting a first submatrix in the next stage and input vectors are derived from results of products of a first submatrix and results of products of a second submatrix which are obtained in a target stage of recursive repetition

· The fourth step: Products of results of the obtained products of the first submatrix in the next stage and corresponding elements of a diagonal matrix are calculated to derive products of submatrices constituting a second submatrix in the next stage and input vectors

· The fifth step: Products of at least a portion of a parameter matrix and input vectors are derived by substituting the results of the products of the initial first submatrix and the results of the products of the initial second submatrix which are obtained respectively in the first and second steps as initial values of the results of the products of the first submatrix and the results of the products of the second submatrix which are obtained in the target stage, and recursively repeating the third step and the fourth step (that is, substituting the obtained results of the products of the respective submatrices in the next stage for results of products of respective submatrices in a new target stage and repeating the processing of the third step and the fourth step)

The initial first submatrix and the initial second submatrix may be constituted by a $1 \times 1$ matrix.

(Backpropagation Phase)

In a backpropagation phase, the control unit 11 calculates an error between a result of performing an inference task which is obtained in a forward propagation phase and a correct answer indicated by the correct answer label 32 associated with the input training data 31 and further calculates a gradient of the calculated error. Then, the control unit 11 backpropagates the calculated error gradient by an error backpropagation method to adjust the value of each parameter. During this adjustment, the control unit 11 adjusts the value of each parameter so that the values of elements of a second submatrix match a product of a first submatrix and a diagonal matrix. That is, the control unit 11 adjusts the values of elements of the first submatrix and the diagonal matrix so as to correspond to the elements of the second submatrix.

When a trained inference model 5 in which a scaling relationship is recursively established is generated, computation of a backpropagation phase may include computations of the following first to eighth steps.

· The first step: Error gradients for products of at least a portion of a parameter matrix and input vectors are acquired

· The second step: Error gradients for elements of a diagonal matrix used in a final stage (that is, multiplied by a first submatrix in the final stage) are derived based on corresponding elements of the acquired error gradients and the values of the products of the submatrices constituting the first submatrix and the input vectors in the final stage of the recursive repetition in the fifth step of the forward propagation phase

· The third step: Error gradients for elements of products of submatrices constituting a first submatrix and input vectors in a final stage are derived based on the acquired error gradients and the values of the elements of the diagonal matrix used in the final stage

· The fourth step: Error gradients for elements of a diagonal matrix used in a target stage of recursive repetition of a forward propagation phase are derived based on the acquired error gradients, the values of the products of the submatrices constituting the first submatrix and the input vectors in the target stage of the recursive repetition of the forward propagation phase, and the error gradients for the products of the submatrices constituting the first submatrix and the input vectors in the stage next to the target stage in the recursive repetition of the forward propagation phase

· The fifth step: Error gradients for elements of products of submatrices constituting a first submatrix and input vectors in a target stage are derived based on the acquired error gradients, values of elements of a diagonal matrix used in the target stage, and error gradients for products of submatrices constituting a first submatrix and input vectors in a next stage

· The sixth step: Error gradients for elements of a diagonal matrix used in each stage are derived by substituting the error gradients for the elements of the products of the submatrices constituting the first submatrix and the input vectors in the final stage, which are derived in the third step of the backpropagation phase, as initial values of error gradients for elements of products of submatrices constituting a first submatrix and input vectors in the next stage and recursively repeating the fourth step and the fifth step of the backpropagation phase until error gradients for elements of a diagonal matrix used in the initial stage of recursive repetition of a forward propagation phase are derived

· The seventh step: Error gradients for elements of submatrices constituting an initial first submatrix are derived based on input vectors and the error gradients for the products of the submatrices constituting the first submatrix and the input vectors in the initial stage, which are derived in the sixth step

· The eighth step: Values of elements of a diagonal matrix used in each stage and elements of submatrices constituting an initial first submatrix are adjusted based on the gradients of errors derived for each of the elements of the diagonal matrix used in each stage and the elements of the submatrices constituting the initial first submatrix

When a parameter matrix corresponds to the output layer 53, the error gradients in the first step are calculated from errors between results of performing an inference task obtained by the forward propagation phase and correct answers indicated by the correct answer label 32 associated with the input training data 31. When a parameter matrix corresponds to the intermediate layer 52 or the input layer 51, the error gradients in the first step are gradients backpropagated from layers after the corresponding layer. As described above, an initial first submatrix may be constituted by a $1\times1$ matrix.

(A) First Specific Example ($2\times2$ Matrix)

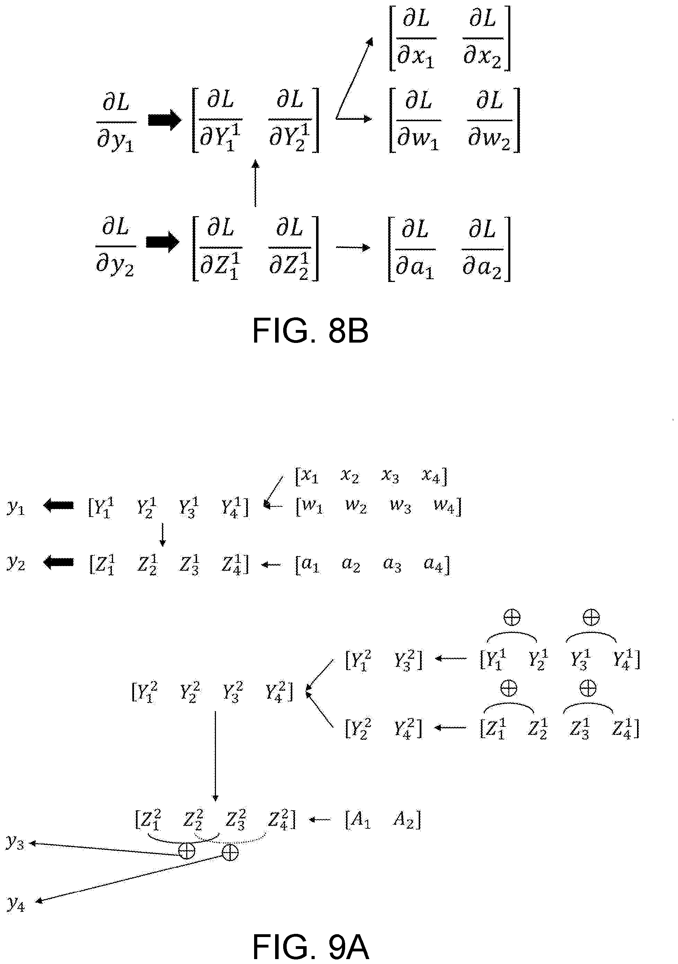

First, an example of computation processes of forward propagation and backpropagation when a scaling relationship is established in a simple case ($2\times2$ matrix) will be described with reference to Figs. 8A and 8B. Figs. 8A and 8B illustrate an example of a computation process in a forward propagation phase and a backpropagation phase of a parameter matrix ($2\times2$ matrix) in which a scaling relationship is established. This case is equivalent to a case where each of the submatrices $w_1$ to $w_4$ in Fig. 1 is a $1\times1$ matrix.

In the forward propagation phase, the control unit 11 calculates products of submatrices ($w_1$, $w_2$) constituting a first submatrix and input vectors ($x_1$, $x_2$). When these elements are expressed as in Equations 2 and 3 below, $Y_1^1$ and $Y_2^1$ can be obtained by this calculation.

[Math. 2]

$$\begin{bmatrix} Z_1^1 \\ Z_2^1 \end{bmatrix} = \begin{bmatrix} a_1 Y_1^1 \\ a_2 Y_2^1 \end{bmatrix} \ (Y_1^1 = w_1 x_1, Y_2^1 = w_2 x_2)$$

...(Equation 2)

[Math. 3]

$$\begin{bmatrix} y_1 \\ y_2 \end{bmatrix} = \begin{bmatrix} Y_1^1 + Y_2^1 \\ Z_1^1 + Z_2^1 \end{bmatrix}$$

… (Equation 3)

Subsequently, the control unit 11 calculates products of results of computing the products of the first submatrix ($Y_1^1$, $Y_2^1$) and products of the corresponding elements ($a_1$, $a_2$) of a diagonal matrix to derive products ($Z_1^1$, $Z_2^1$) of submatrices constituting a second submatrix and input vectors. Fig. 8A illustrates the computation process so far. As a result of this computation processing, results ($y_1$, $y_2$) of products of a parameter matrix and input vectors can be derived. When a parameter matrix corresponds to the input layer 51 or the intermediate layer 52, the control unit 11 forward propagates the obtained results of the products to the next layer. On the other hand, when a parameter matrix corresponds to the output layer 53, the control unit 11 obtains results of products as results of performing an inference task.

In a backpropagation phase, the control unit 11 acquires gradients ($\partial L/\partial y_1$, $\partial L/\partial y_2$) of an error L for the products of the parameter matrix and the input vectors. As described above, when a parameter matrix corresponds to the output layer 53, the control unit 11 can obtain the error gradients ($\partial L/\partial y_1$, $\partial L/\partial y_2$) by partially differentiating the error between the performance result of the inference task obtained in the forward propagation phase and the correct answer indicated by the corresponding correct answer label 32. On the other hand, when a parameter matrix is the intermediate layer 52 or the input layer 51, the control unit 11 can obtain gradients backpropagated from layers after the corresponding layer as the error gradients ($\partial L/\partial y_1$, $\partial L/\partial y_2$).

[Math. 4]

$$\frac{\partial L}{\partial a_1} = \frac{\partial L}{\partial Z_1^1} \frac{\partial Z_1^1}{\partial a_1}$$

… (Equation 4)

[Math. 5]

$$\frac{\partial L}{\partial Z_1^1} = \frac{\partial L}{\partial y_2} \frac{\partial y_2}{\partial Z_1^1}$$

... (Equation 5)

Elements ($\partial L/\partial a_1$) of a diagonal matrix can be expressed by the above Equations 4 and 5 in accordance with a chain rule. From Equation 3 above, ($\partial y_2/\partial Z_1^1$) is 1. Thus, ($\partial L/\partial Z_1^1$) becomes ($\partial L/\partial y_2$). From Equation 2 above, ($\partial Z_1^1/\partial a_1$) becomes ($Y_1^1$) . Thus, ($\partial L/\partial a_1$) becomes ($\partial L/\partial y_2$) $\times$ ($Y_1^1$). When the other elements ($\partial L/\partial a_2$) of the diagonal matrix is similarly calculated, ($\partial L/\partial a_2$) becomes ($\partial L/\partial y_2$) $\times$ ($Y_2^1$). For this reason, the control unit 11 can derive errors gradients ($\partial L/\partial a_1$, $\partial L/\partial a_2$) for the elements of the diagonal matrix based on the.1 corresponding elements ($\partial L/\partial y_2$) of the acquired error gradients, and the values ($Y_1^1$, $Y_2^1$) of the products of the submatrices constituting the first submatrix and the input vectors.
[Math. 6]

$$\frac{\partial L}{\partial w_1} = \frac{\partial L}{\partial Y_1^1} \frac{\partial Y_1^1}{\partial w_1}$$

... (Equation 6)

[Math. 7]

$$\frac{\partial L}{\partial Y_1^1} = \frac{\partial L}{\partial y_1} \frac{\partial y_1}{\partial Y_1^1} + \frac{\partial L}{\partial Z_1^1} \frac{\partial Z_1^1}{\partial Y_1^1}$$

... (Equation 7)

Subsequently, the control unit 11 calculates error gradients ($\partial L/\partial w_1$, $\partial L/\partial w_2$) for elements of submatrices constituting a first submatrix. Out of the gradients of the errors of the first submatrixa, ($\partial L/\partial w_1$) can be expressed by Equations 6 and 7 above in accordance with a chain rule. As illustrated in Fig. 8A, a change in $Y_1^1$ is transmitted to $y_1$ and $Z_1^1$. For this reason, ($\partial L/\partial Y_1^1$) is expressed by Equation 7.
From Equation 3 above, ($\partial y_1/\partial Y_1^1$) is 1. From Equation 2 above, ($\partial Z_1^1/\partial Y_1^1$) is $a_1$. ($\partial Y_1^1/\partial w_1$) is $x_1$. Thus, ($\partial L/\partial Y_1^1$) becomes "($\partial L/\partial y_1$) + ($\partial L/\partial Z_1^1$) $\times$ $a_1$", and ($\partial L/\partial w_1$) becomes "($\partial L/\partial Y_1\partial$) $\times$ x1". Similarly, ($\partial L/\partial Y_2^1$) becomes "($\partial L/\partial y_1$) + ($\partial L/\partial Z_2^1$) $\times$ $a_2$", and ($\partial L/\partial w_2$) becomes "($\partial L/\partial Y_2^1$) $\times$ $x_2$". ($\partial L/\partial Z_1^1$) and ($\partial L/\partial Z_2^1$) have already been calculated by previous computation (for example, Equation 5). Consequently, the control unit 11 derives error gradients ($\partial L/\partial Y_1^1$, $\partial L/\partial Y_2^1$) for elements of products of submatrices constituting a first submatrix and input vectors based on the acquired error gradients ($\partial L/\partial y_1$, $\partial L/\partial y_2$) and the values ($a_1$, $a_2$) of the elements of the diagonal matrix. Then, the control unit 11 derives error gradients ($\partial L/\partial w_1$, $\partial L/\partial w_2$) for elements of submatrices constituting a first submatrix based on the input vectors ($x_1$, $x_2$) and the error gradients ($\partial L/\partial Y_1^1$, $\partial L/\partial Y_2^1$) for the products of the first submatrix and the input vectors.
[Math. 8]

$$\frac{\partial L}{\partial x_1} = \frac{\partial L}{\partial Y_1^1} \frac{\partial Y_1^1}{\partial x_1}$$

... (Equation 8)

The control unit 11 calculates error gradients for input vectors in order to backpropagate the errors to the previous layer. Out of the error gradients for the input vectors, ($\partial L/\partial x_1$) can be expressed by Equation 8 above in accordance with a chain rule. (3$\partial L/\partial Y_1^1$) has already been calculated by the previous computation. From Equation 2 above, ($\partial Y_1^1/\partial x_1$) is $w_1$. For this reason, ($\partial L/\partial x_1$) becomes "($\partial L/\partial Y_1^1$) $\times$ $w_1$". Similarly, ($\partial L/\partial x_2$) becomes "($\partial L/\partial Y_2^1$) $\times$ $w_2$". Consequently, the control unit 11 calculates error gradients ($\partial L/\partial x_1$, $\partial L/\partial x_2$) for input vectors based on the values ($w_1$, $w_2$) of the elements of the submatrices constituting the first submatrix and the error gradients ($\partial L/\partial Y_1^1$, $\partial L/\partial Y_2^1$) for the products of the first submatrix and the input vectors. When a parameter matrix corresponds to the intermediate layer 52 or the output layer 53, the control unit 11 backpropagates the calculated error gradients to the previous layer. Fig. 8B illustrates the computation process so far. As a result of the computation processing, gradients of respective errors for adjusting elements of a first submatrix and elements of a diagonal matrix can be obtained. The control unit 11 adjusts the values of the parameters (the elements of the first submatrix and the elements of the diagonal matrix) using the obtained error gradients.

(B) Second Specific Example (4×4 Matrix)

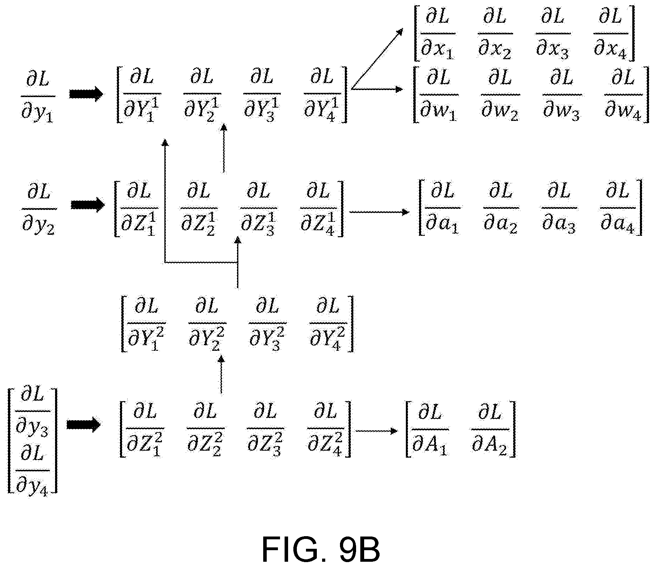

Next, an example of computation processes of forward propagation and backpropagation when a scaling relationship is recursively established in a simple case (4×4 matrix) will be described with reference to Figs. 9A and 9B. Figs. 9A and 9B illustrate an example of a computation process in a forward propagation phase and a backpropagation phase of a parameter matrix (4×4 matrix) in which a scaling relationship is recursively established. This case is equivalent to a case where each of the submatrices ($w_1$ to $w_4$ and the like) in the final division in Fig. 5B is a 1×1 matrix.

In the forward propagation phase, the control unit 11 calculates products of submatrices ($w_1$ to $w_4$) constituting an initial first submatrix and input vectors ($x_1$ to $x_4$). This calculation is equivalent to the computation in the first step of the forward propagation phase. When these elements are expressed as in Equations 9 and 10 below, results ($Y_1^1$, $Y_2^1$, $Y_3^1$, $Y_4^1$) of products of the initial first submatrix can be obtained by this calculation.

[Math. 9]

$$\begin{bmatrix} Z_1^1 \\ Z_2^1 \\ Z_3^1 \\ Z_4^1 \end{bmatrix} = \begin{bmatrix} a_1 Y_1^1 \\ a_2 Y_2^1 \\ a_3 Y_3^1 \\ a_4 Y_4^1 \end{bmatrix} (Y_1^1 = w_1 x_1, Y_2^1 = w_2 x_2, \; Y_3^1 = w_3 x_3, Y_4^1 = w_4 x_4)$$

$$\dots \text{(Equation 9)}$$

[Math. 10]

$$\begin{bmatrix} y_1 \\ y_2 \end{bmatrix} = \begin{bmatrix} Y_1^1 + Y_2^1 + Y_3^1 + Y_4^1 \\ Z_1^1 + Z_2^1 + Z_3^1 + Z_4^1 \end{bmatrix}$$

$$\dots \text{(Equation 10)}$$

Subsequently, the control unit 11 derives products ($Z_1^1$ to $Z_4^1$) of submatrices constituting an initial second submatrix and input vectors by calculating products of computation results ($Y_1^1$ to $Y_4^1$) of the products of the first submatrix and corresponding elements ($a_1$ to $a_4$) of a diagonal matrix. This calculation is equivalent to the computation in the second step of the forward propagation phase. Each of ($w_1$, $w_2$, aiwi, azwz) and ($w_3$, $w_4$, $a_3 w_3$, $a_4 w_4$) is equivalent to a first submatrix ($W_1$, $W_2$) in the next stage. The elements of the first submatrix in the next stage can be expressed by Equations 11 and 12 below.

[Math. 11]

$$W_1 \begin{bmatrix} x_1 \\ x_2 \end{bmatrix} = \begin{bmatrix} Y_1^1 + Y_2^1 \\ Z_1^1 + Z_2^1 \end{bmatrix} = \begin{bmatrix} Y_1^2 \\ Y_2^2 \end{bmatrix}$$

$$\dots \text{(Equation 11)}$$

[Math. 12]

$$W_2 \begin{bmatrix} x_3 \\ x_4 \end{bmatrix} = \begin{bmatrix} Y_3^1 + Y_4^1 \\ Z_3^1 + Z_4^1 \end{bmatrix} = \begin{bmatrix} Y_3^2 \\ Y_4^2 \end{bmatrix}$$

$$\dots \text{(Equation 12)}$$

Consequently, the control unit 11 derives products ($Y_1^2$ to $Y_4^2$) of submatrices constituting the first submatrix in the next stage and input vectors from the results ($Y_1^1$ to $Y_4^1$) of the products of the initial first submatrix and the results

$(Z_1^1$ to $Z_4^1)$ of the products of the second submatrix. This calculation is equivalent to the computation in the third step of the forward propagation phase which is executed by substituting the results of the products of the initial first submatrix and the results of the products of the initial second submatrix, which are respectively obtained in the first step and the second step, as initial values of results of products of a first submatrix and results of products of a second submatrix, which are obtained in a target stage.

Then, the control unit 11 derives products $(Z_1^2$ to $Z_4^2)$ of submatrices constituting a second submatrix in the next stage and input vectors by calculating products $(A_1$ and $A_2)$ of the obtained results $(Y_1^2$ to $Y_4^2)$ of the products of the first submatrix in the next stage and the corresponding elements of the diagonal matrix. This calculation is equivalent to the computation in the fourth step of the forward propagation phase. The products of the second submatrix can be expressed by Equation 13 below.

[Math. 13]

$$A_1 W_1 \begin{bmatrix} x_1 \\ x_2 \end{bmatrix} + A_2 W_2 \begin{bmatrix} x_3 \\ x_4 \end{bmatrix} = \begin{bmatrix} Z_1^2 \\ Z_2^2 \end{bmatrix} + \begin{bmatrix} Z_3^2 \\ Z_4^2 \end{bmatrix} = \begin{bmatrix} y_3 \\ y_4 \end{bmatrix}$$

… (Equation 13)

In this case, the number of times a scaling relationship is recursively established is one, and thus the computation in the fifth step of the forward propagation phase is achieved by the computation processing. That is, the control unit 11 can derive results $(y_1$ to $y_4)$ of products of a parameter matrix and input vectors. Fig. 9A illustrates the computation process so far. When the parameter matrix corresponds to the input layer 51 or the intermediate layer 52, the control unit 11 performs forward propagation of the obtained results of the products to the next layer. On the other hand, when the parameter matrix corresponds to the output layer 53, the control unit 11 acquires results of products as performance results of an inference task.

In a backpropagation phase, the control unit 11 acquires gradients $(\partial L/\partial y_1$ to $\partial L/\partial y_4)$ of an error L for the products of the parameter matrix and the input vectors. An acquisition method is the same as in the first specific example. This processing is equivalent to the processing of the first step of the backpropagation phase.

Subsequently, the control unit 11 derives error gradients for elements of diagonal matrices $(A_1, A_2)$ used in a final stage. When diagonal components of the diagonal matrix $A_1$ are expressed as diag($A_{11}, A_{12}$) and diagonal components of the diagonal matrix $A_2$ are expressed as diag($A_{21}, A_{22}$), gradients of elements $(\partial L/\partial A_{11}, \partial L/\partial A_{12}, \partial L/\partial A_{21}, \partial L/\partial A_{22})$ satisfy Equations 14 to 17 below through gradients $(\partial L/\partial Z_1^2$ to $\partial L/\partial Z_4^2)$ of errors of a second submatrix in the final stage in accordance with a chain rule, as in the first specific example.

[Math. 14]

$$\frac{\partial L}{\partial A_{11}} = Y_1^2 \frac{\partial L}{\partial y_3}$$

… (Equation 14)

[Math. 15]

$$\frac{\partial L}{\partial A_{12}} = Y_2^2 \frac{\partial L}{\partial y_4}$$

… (Equation 15)

[Math. 16]

$$\frac{\partial L}{\partial A_{21}} = Y_3^2 \frac{\partial L}{\partial y_3}$$

… (Equation 16)

[Math. 17]

$$\frac{\partial L}{\partial A_{22}} = Y_4^2 \frac{\partial L}{\partial y_4}$$

$$\dots \text{(Equation 17)}$$

For this reason, the control unit 11 derives error gradients ($\partial L/\partial A_{11}$, $\partial L/\partial A_{12}$, $\partial L/\partial A_{21}$, $\partial L/\partial A_{22}$) for elements of a diagonal matrix used in a final stage, based on the corresponding elements ($\partial L/\partial y_3$, $\partial L/\partial y_4$) of the acquired error gradients and the values ($Y_1^2$ to $Y_4^2$) of the products of the submatrices constituting the first submatrix and the input vectors in the final stage of the recursive repetition in the fifth step of the forward propagation phase. This computation is equivalent to the second step of the backpropagation phase. The values ($Y_1^2$ to $Y_4^2$) of the products of the first submatrix have already been calculated by the forward propagation phase.

Similarly, error gradients ($\partial L/\partial Y_1^2$ to $\partial L/\partial Y_4^2$) for elements of the products of the submatrices constituting the first submatrix and the input vectors in the final stage satisfy Equation 18 to Equation 21 below through the error gradients ($\partial L/\partial Z_1^2$ to $\partial L/\partial Z_4^2$) for the products of the second submatrix in the final stage in accordance with a chain rule.

[Math. 18]

$$\frac{\partial L}{\partial Y_1^2} = A_{11} \frac{\partial L}{\partial y_3}$$

$$\dots \text{(Equation 18)}$$

[Math. 19]

$$\frac{\partial L}{\partial Y_2^2} = A_{12} \frac{\partial L}{\partial y_4}$$

$$\dots \text{(Equation 19)}$$

[Math. 20]

$$\frac{\partial L}{\partial Y_3^2} = A_{21} \frac{\partial L}{\partial y_3}$$

$$\dots \text{(Equation 20)}$$

[Math. 21]

$$\frac{\partial L}{\partial Y_4^2} = A_{22} \frac{\partial L}{\partial y_4}$$

$$\dots \text{(Equation 21)}$$

For this reason, the control unit 11 derives the error gradients ($\partial L/\partial Y_1^2$ to $\partial L/\partial Y_4^2$) for the elements of the products of the submatrices constituting the first submatrix and the input vectors in the final stage, based on the corresponding elements ($\partial L/\partial y_3$, $\partial L/\partial y_4$) of the acquired error gradients and the values ($A_{11}$, $A_{12}$, $A_{21}$, $A_{22}$) of the elements of the diagonal matrix used in the final stage. This computation is equivalent to the third step of the backpropagation phase.

Next, the control unit 11 derives error gradients ($\partial L/\partial a_1$ to $\partial L/\partial a_4$) for elements of a diagonal matrix used in the previous stage (target stage). The error gradients ($\partial L/\partial a_1$ to $\partial L/\partial a_4$) for the elements satisfy Equations 22 to 25 below through error gradients ($\partial L/\partial Z_1^1$ to $\partial L/\partial Z_4^1$) for products of a second submatrix in the stage in accordance with a chain rule.

[Math. 22]

$$\frac{\partial L}{\partial a_1} = Y_1^1 \left( \frac{\partial L}{\partial y_2} + \frac{\partial L}{\partial Y_2^2} \right)$$

... (Equation 22)

[Math. 23]

$$\frac{\partial L}{\partial a_2} = Y_2^1 \left( \frac{\partial L}{\partial y_2} + \frac{\partial L}{\partial Y_2^2} \right)$$

... (Equation 23)

[Math. 24]

$$\frac{\partial L}{\partial a_3} = Y_3^1 \left( \frac{\partial L}{\partial y_2} + \frac{\partial L}{\partial Y_4^2} \right)$$

... (Equation 24)

[Math. 25]

$$\frac{\partial L}{\partial a_4} = Y_4^1 \left( \frac{\partial L}{\partial y_2} + \frac{\partial L}{\partial Y_4^2} \right)$$

... (Equation 25)

For this reason, the control unit 11 derives error gradients ($\partial L/\partial a_1$ to $\partial L/\partial a_4$) for elements of a diagonal matrix used in a target stage, based on the acquired error gradient ($\partial 3L/\partial y_2$), the values ($Y_1^1$ to $Y_4^1$) of the products of the submatrices constituting the first submatrix and the input vectors in the target stage, and error gradients ($\partial L/\partial Y_2^2$, $\partial L/\partial Y_4^2$) for products of submatrices constituting a first submatrix and input vectors in a stage (in this case, the final stage) next to the target stage. This computation is equivalent to the computation in the fourth step of the backpropagation phase which is executed by substituting the error gradients for the elements of the products of the submatrices constituting the first submatrix and the input vectors in the final stage, which are derived in the third step, as initial values of error gradients for elements of products of submatrices constituting a first submatrix and input vectors in the next stage. The values ($Y_1^1$ to $Y_4^1$) of the products of the first submatrix have already been calculated by the forward propagation phase.

Next, the control unit 11 derives error gradients ($\partial L/\partial Y_1^1$ to $\partial L/\partial Y_4^1$) for elements of products of submatrices constituting a first submatrix and input vectors in a target stage. The error gradients ($\partial L/\partial Y_1^1$ to $\partial L/\partial Y_4^1$) for the products of the first submatrix in the target stage satisfy Equations 26 to 29 below through error gradients ($\partial L/\partial Z_1^1$ to $\partial L/\partial Z_4^1$) for products of a second submatrix in the stage in accordance with a chain rule.

[Math. 26]

$$\frac{\partial L}{\partial Y_1^1} = \frac{\partial L}{\partial y_1} + a_1 \left( \frac{\partial L}{\partial y_2} + \frac{\partial L}{\partial Y_2^2} \right) + \frac{\partial L}{\partial Y_1^2}$$

... (Equation 26)

[Math. 27]

$$\frac{\partial L}{\partial Y_2^1} = \frac{\partial L}{\partial y_1} + a_2 \left( \frac{\partial L}{\partial y_2} + \frac{\partial L}{\partial Y_2^2} \right) + \frac{\partial L}{\partial Y_1^2}$$

... (Equation 27)

[Math. 28]

$$\frac{\partial L}{\partial Y_3^1} = \frac{\partial L}{\partial y_1} + a_3 \left( \frac{\partial L}{\partial y_2} + \frac{\partial L}{\partial Y_4^2} \right) + \frac{\partial L}{\partial Y_3^2}$$

… (Equation 28)

[Math. 29]

$$\frac{\partial L}{\partial Y_4^1} = \frac{\partial L}{\partial y_1} + a_4 \left( \frac{\partial L}{\partial y_2} + \frac{\partial L}{\partial Y_4^2} \right) + \frac{\partial L}{\partial Y_3^2}$$

… (Equation 29)

For this reason, the control unit 11 derives error gradients ($\partial L/\partial Y_1^1$ to $\partial L/\partial Y_4^1$) for elements of products of submatrices constituting a first submatrix and input vectors in a target stage, based on the acquired error gradients ($\partial L/\partial y_1$, $\partial L/\partial y_2$), values ($a_1$ to $a_4$) of elements of a diagonal matrix used in the target stage, and error gradients ($\partial L/\partial Y_1^2$ to $\partial L/\partial Y_4^2$) for products of submatrices constituting a first submatrix and input vectors in a next stage (in this case, the final stage). This computation is equivalent to the computation in the fifth step of the backpropagation phase. In this case, the number of times that a scaling relationship is recursively established is one, and thus the computation in the sixth step of the backpropagation phase is achieved by the computation processing. That is, through the processing so far, the error gradients ($\partial L/\partial A_{11}$, $\partial L/\partial A_{12}$, $\partial L/\partial A_{21}$, $\partial L/\partial A_{22}$, $\partial L/\partial a_1$ to $\partial L/\partial a_4$) for the elements of the diagonal matrix used in each stage, and the error gradients ($\partial L/\partial Y_1^1$ to $\partial L/\partial Y_4^1$) for the products of the submatrices constituting the first submatrix and the input vectors in the initial stage are derived.

Next, the control unit 11 derives error gradients ($\partial L/\partial w_1$ to $\partial L/\partial w^4$) for elements of submatrices constituting an initial first submatrix. The error gradients ($\partial L/\partial w_1$ to $\partial L/\partial w^4$) of the initial first submatrix satisfy Equations 30 to 33 below in accordance with a chain rule.

[Math. 30]

$$\frac{\partial L}{\partial w_1} = x_1 \frac{\partial L}{\partial Y_1^1}$$

… (Equation 30)

[Math. 31]

$$\frac{\partial L}{\partial w_2} = x_2 \frac{\partial L}{\partial Y_2^1}$$

… (Equation 31)

[Math. 32]

$$\frac{\partial L}{\partial w_3} = x_3 \frac{\partial L}{\partial Y_3^1}$$

… (Equation 32)

[Math. 33]

EP 4 307 187 A1

$$\frac{\partial L}{\partial w_4} = x_4 \frac{\partial L}{\partial Y_4^1}$$

... (Equation 33)

For this reason, the control unit 11 derives the error gradients ($\partial L/\partial w_1$ to $\partial L/\partial w_4$) for the elements of the submatrices constituting the initial first submatrix based on the input vectors ($x_1$ to $x_4$) and the error gradients ($\partial L/\partial Yi^1$ to $\partial L/\partial_4^1$) for the products of the submatrices constituting the first submatrix and the input vectors in the initial stage which are derived in the sixth step. This computation is equivalent to the seventh step of the backpropagation phase. Through the computation so far, it is possible to obtain information on error gradients used to adjust (update) a parameter matrix, that is, the elements of the submatrices constituting the initial first submatrix and the error gradients for the elements of the diagonal matrix used in each stage (in this case, $\partial L/\partial w_1$ to $\partial L/\partial w_4$, $\partial L/\partial A_{11}$, $\partial L/\partial A_{12}$, $\partial L/\partial A_{21}$, $\partial L/\partial A_{22}$, $\partial L/\partial a_1$ to $\partial L/\partial a_4$). The control unit 11 adjusts the values of the elements of the diagonal matrix used in each stage and the elements of the submatrices constituting the initial first submatrix so that errors between the values and inference results become small, based on an error gradient derived for each of the elements of the diagonal matrix used in each stage and the elements of the submatrices constituting the initial first submatrix. The amount of adjustment may be appropriately adjusted in accordance with a learning rate. This computation is equivalent to the eighth step of the backpropagation phase.

When a parameter matrix corresponds to the intermediate layer 52 or the output layer 53, the control unit 11 backpropagates an error to the previous layer, and thus the control unit 11 derives error gradients ($\partial L/\partial x_1$ to $\partial L/\partial x_4$) for input vectors. The error gradients ($\partial L/\partial x_1$ to $\partial L/\partial x_4$) for the input vectors satisfy Equations 34 to 37 below in accordance with a chain rule.

[Math. 34]

$$\frac{\partial L}{\partial x_1} = w_1 \frac{\partial L}{\partial Y_1^1}$$

... (Equation 34)

[Math. 35]

$$\frac{\partial L}{\partial x_2} = w_2 \frac{\partial L}{\partial Y_2^1}$$

... (Equation 35)

[Math. 36]

$$\frac{\partial L}{\partial x_3} = w_3 \frac{\partial L}{\partial Y_3^1}$$

... (Equation 36)

[Math. 37]

$$\frac{\partial L}{\partial x_4} = w_4 \frac{\partial L}{\partial Y_4^1}$$

... (Equation 37)

For this reason, the control unit 11 derives error gradients ($\partial L/\partial x_1$ to $\partial L/\partial x_4$) for input vectors based on the values (wi to $w_4$) of the elements of the submatrices constituting the first submatrix in the initial stage and the error gradients ($\partial L/\partial Y_1^1$ to $\partial L/\partial Y_4^1$) for the products of the submatrices constituting the first submatrix and the input vectors

24

in the initial stage. Fig. 9B illustrates the computation processing so far. The control unit 11 backpropagates the derived error gradients to the previous layer.

(C) Third Specific Example (Matrix Having Arbitrary Size)

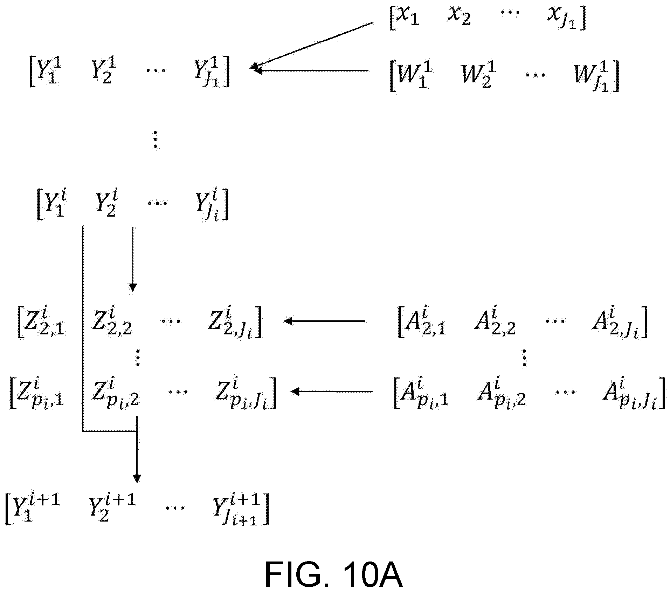

Next, an example of computation processes of forward propagation and backpropagation when a scaling relationship is recursively established in a generalized case (a matrix having an arbitrary size) will be described with reference to Figs. 10A and 10B. Figs. 10A and 10B illustrate examples of computation processes in a forward propagation phase and a backpropagation phase of a parameter matrix in which a scaling relationship is recursively established. This case is equivalent to the case of the parameter matrix illustrated in Fig. 5C. The computation process in this case is the same as in the second specific example described above, except that the number of elements is generalized.

In the forward propagation phase, the control unit 11 calculates a product of a submatrix $(W_j^1)$ constituting an initial first submatrix and an input vector $(x_j)$ as processing of a first step (Equation 38). By this calculation, the control unit 11 obtains a result $(Y_j^1)$ of the product of the initial first submatrix.

[Math. 38]

$$Y_j^1 = x_j W_j^1 \ \ (1 \leq j \leq J_1)$$

$$\ldots \text{(Equation 38)}$$

Subsequently, as processing of a second step, the control unit 11 calculates a product of the computation result $(Y_j^1)$ of the product of the first submatrix and a diagonal matrix $(A_{k,j}^1)$ to derive a product $(Z_{k,j}^1)$ of submatrices constituting an initial second submatrix and input vectors (a case where i=1 in Equation 39).

[Math. 39]

$$Z_{k,j}^i = A_{k,j}^i Y_j^i \ \ \begin{pmatrix} 1 \leq i \leq l \\ 2 \leq k \leq p_i \\ 1 \leq j \leq J_i \end{pmatrix}$$

$$\ldots \text{(Equation 39)}$$

$J_i$ is calculated by Equation 1.

Next, as processing of a third step, the control unit 11 derives a product $(Y_j^{1+1})$ of a submatrix constituting a first submatrix in a next stage and an input vector from a result $(Y_j^1)$ of a product of the first submatrix obtained in a target stage of recursive repetition and a result $(Z_{k,j}^1)$ of a product of a second submatrix. Here, elements of $Y_j^1$ and $Z_{k,j}^1$ are assumed to be $Y_{j,m}^i$ and $Z_{k,j,m}^i$, respectively (Equation 40). As processing of a fourth step, the control unit 11 calculates a product of the obtained result $(Y_j^{i+1})$ of the product of the first submatrix in the next stage and a diagonal matrix $(A_{k,j}^{i+1})$ to derive a product $(Z_{k,j}^{i+1})$ of a submatrix constituting a second submatrix in the next stage and an input vector (Equation 39).

[Math. 40]

$$Y_{j,kN_i+m}^{i+1} = \begin{cases} \sum_{s=1}^{q_i} Y_{q_i(j-1)+s,\,m}^i & (k=0) \\ \sum_{s=1}^{q_i} Z_{k+1,\,q_i(j-1)+s,\,m}^i & (k \geq 1) \end{cases} \begin{pmatrix} 1 \leq i \leq l \\ 0 \leq k \leq p_i - 1 \\ 1 \leq j \leq J_{i+1} \\ 1 \leq m \leq N_i \\ 1 \leq s \leq q_i \end{pmatrix}$$

$$\ldots \text{(Equation 40)}$$

The control unit 11 substitutes the result $(Y_j^1)$ of the product of the initial first submatrix and the result $(Z_{k,j}^1)$ of the product of the initial second submatrix which are respectively obtained in the first step and the second step as initial values of the result $(Y_j^1)$ of the product of the first submatrix obtained in the target stage and the result $(Z_{k,j}^1)$ of the product of the second submatrix. Then, the control unit 11 recursively repeats the third step and the fourth step. These series of processing is equivalent to the processing of the fifth step of the forward propagation phase. In this case, the control unit 11 repeats the processing of the third step and the fourth step 1 times. Based on this computation result, the control unit 11 can derive a result of a product of a parameter matrix and an input vector (a case where i=l in Equation 40). Fig. 10A illustrates the computation processing so far. When the parameter matrix corresponds to the input layer 51 or the intermediate layer 52, the control unit 11 performs forward propagation of the obtained result of the product to the next layer. On the other hand, when the parameter matrix corresponds to the output layer 53, the control unit 11 acquires a result of a product as a result of performing an inference task.

In a backpropagation phase, the control unit 11 acquires a gradient $(\partial L/\partial Y_j^{l+1})$ of an error L for a product of a parameter matrix and an input vector as processing of a first step. An acquisition method is the same as in the first specific example.

Subsequently, the control unit 11 performs processing of a second step as follows.

Gradients of errors for elements $(A_{k,j,m}^l)$ of a diagonal matrix $(A_{k,j}^1)$ used in a final stage are derived based on the corresponding elements of the acquired error gradient $(\partial L/\partial Y_j^{l+1})$ and the values $(Y_j^l)$ of the products of the submatrices constituting the first submatrix and the input vectors in the final stage of the recursive repetition of the fifth step of the forward propagation phase (a case where i=l in Equations 41 and 42).

[Math. 41]

$$\frac{\partial L}{\partial A_{k,j,m}^i} = Y_{j,m}^i \frac{\partial L}{\partial Z_{k,j,m}^i} \quad \begin{pmatrix} 1 \le i \le l \\ 2 \le k \le p_i \\ 1 \le j \le J_i \\ 1 \le m \le N_i \end{pmatrix}$$

… (Equation 41)

[Math. 42]

$$\frac{\partial L}{\partial Z_{k+1,q_i(j-1)+s,m}^i} = \frac{\partial L}{\partial Y_{j,kN_i+m}^{i+1}} \quad \begin{pmatrix} 1 \le i \le l \\ 1 \le k \le p_i - 1 \\ 1 \le j \le J_{i+1} \\ 1 \le m \le N_i \\ 1 \le s \le q_i \end{pmatrix}$$

… (Equation 42)

Next, as processing of a third step, the control unit 11 derives elements $(\partial L/\partial Y_{j,m}^l)$ of error gradients $(\partial L/\partial Y_j^l)$ for elements of products of submatrices constituting a first submatrix and input vectors in the final stage, based on the acquired error gradients $(\partial L/\partial Y_j^{l+1})$ and the values of the elements $(A_{k,j,m}^l)$ of the diagonal matrix $(A_{k,j}^1)$ used in the final stage (a case where i=l in Equations 42 and 43).

[Math. 43]

$$\frac{\partial L}{\partial Y_{q_i(j-1)+s,m}^i} = \frac{\partial L}{\partial Y_{j,m}^{i+1}} + \sum_{k=2}^{p_i} A_{k,q_i(j-1)+s,m}^i \frac{\partial L}{\partial Z_{k,q_i(j-1)+s,m}^i} \quad \begin{pmatrix} 1 \le i \le l \\ 1 \le j \le J_{i+1} \\ 1 \le m \le N_i \\ 1 \le s \le q_i \end{pmatrix}$$

… (Equation 43)

Subsequently, as processing of a fourth step, the control unit 11 derives error gradients $(\partial L/\partial A_{k,j}^i)$ for elements of a diagonal matrix used in a target stage, based on the acquired error gradients $(\partial L/\partial Y_j^{i+1})$, the values $(Y_j^1)$ of the products of the submatrices constituting the first submatrix and the input vectors in the target stage of the recursive repetition of the forward propagation phase, and the error gradients $(\partial L/\partial Y_j^{i+1})$ for the products of the submatrices constituting the first submatrix and the input vectors in the stage next to the target stage in the recursive repetition of the forward propagation phase (Equations 41 and 42).

As processing of a fifth step, the control unit 11 derives error gradients $(\partial L/\partial Y_j^i)$ for elements of products of submatrices constituting a first submatrix and input vectors in a target stage, based on the acquired error gradients $(\partial L/\partial Y_j^{i+1})$, the values of the elements of the diagonal matrix $(A_{k,j}^i)$ used in the target stage, and the error gradients $(\partial L/\partial Y_j^{i+1})$ for the products of the submatrices constituting the first submatrix and the input vectors in the next stage (Equations 42 and 43).

The control unit 11 substitutes the error gradients ($\partial L/\partial Y_j^i$) for the elements of the products of the submatrices constituting the first submatrix and input vectors in the final stage, which are derived in the third step of the backpropagation phase, as initial values of the error gradients ($\partial L/\partial Y_j^{i+1}$) for the elements of the products of the submatrices constituting the first submatrix and the input vectors in the next stage. Then, the control unit 11 derives error gradients ($\partial L/\partial A_{k,j}^i$, i is a natural number from 1 to l) for elements of a diagonal matrix used in each stage by recursively repeating the fourth step and the fifth step of the backpropagation phase until the error gradients ($\partial L/\partial A_{k,j}^1$) for the elements of the diagonal matrix used in the initial stage of recursive repetition of the forward propagation phase are derived. These series of processing is equivalent to the sixth step of the backpropagation phase. Through the processing so far, the error gradients ($\partial L/\partial A_{k,j}^i$) for the elements of the diagonal matrix used in each stage, and the error gradients ($\partial L/\partial Y_j^1$) for the products of the submatrices constituting the first submatrix and the input vectors in the initial stage are derived.

Next, as processing of a seventh step, the control unit 11 derives error gradients ($\partial L/\partial W_j^1$) for elements of submatrices constituting an initial first submatrix, based on an input vector ($x_j$) and the error gradients ($\partial L/\partial Y_j^1$) for the products of the submatrices constituting the first submatrix and the input vectors in the initial stage, which are derived in the sixth step.

[Math. 44]

$$\frac{\partial L}{\partial W_j^1} = x_j \frac{\partial L}{\partial Y_j^1} \quad (1 \leq j \leq J_1)$$

... (Equation 44)

As processing of an eighth step, the control unit 11 adjusts values ($A_{k,j}^i$, $W_j^1$) of elements of a diagonal matrix used in each stage and elements of submatrices constituting an initial first submatrix, based on the error gradients ($\partial L/\partial A_{k,j}^i$, $\partial L/\partial W_j^1$) derived for the elements of the diagonal matrix used in each stage and the elements of the submatrices constituting the initial first submatrix.

When a parameter matrix corresponds to the intermediate layer 52 or the output layer 53, the control unit 11 derives error gradients ($\partial L/\partial x_j$) for input vectors, based on the values ($W_j^1$) of the elements of the submatrices constituting the first submatrix in the initial stage and the error gradients ($\partial L/\partial Y_j^1$) for the products of the submatrices constituting the first submatrix and the input vectors in the initial stage in order to backpropagates an error to the previous layer (Equation 45). Fig. 10B illustrates the computation process so far. The control unit 11 backpropagates the derived error gradients to the previous layer.

[Math. 45]

$$\frac{\partial L}{\partial x_j} = W_j^1 \frac{\partial L}{\partial Y_j^1} \quad (1 \leq j \leq J_1)$$

... (Equation 45)

(Summary)

According to the above-described computation processes, the control unit 11 can execute processing of a forward propagation phase and a backpropagation phase and adjust the values of the parameters of the inference model 5 in each case. The control unit 11 may repeatedly execute the processing of the forward propagation phase and the backpropagation phase until predetermined conditions (for example, the processing being executed a specified number of times, and the sum of errors calculated being equal to or less than a threshold value) is satisfied.

As a result of the machine learning processing, the control unit 11 can generate a trained inference model 5 that has acquired the ability to perform an inference task and that has been adjusted such that the value of each element of a second submatrix matches a product of a first submatrix and a diagonal matrix. In particular, according to the second and third specific examples, it is possible to generate a trained inference model 5 in which the values of parameters are adjusted such that a scaling relationship is recursively established within at least a portion of a parameter matrix. When the machine learning processing is completed, the control unit 11 causes the processing to proceed to the next step S103.

(Step S103)

Returning back to Fig. 7, in step S103, the control unit 11 operates as the storage processing unit 113 and generates information on the trained inference model 5 generated by machine learning as learning result data 125. Information for reproducing the trained inference model 5 is stored in the learning result data 125. As an example, the learning result data 125 may be configured to include information indicating the values of parameters constituting a first submatrix obtained by the adjustment of the machine learning and the values of diagonal components of a diagonal matrix, and information on parameters constituting a second submatrix may be omitted. As another example, when a scaling relationship is recursively established, the learning result data 125 may be configured to include information indicating values ($W_j^1$) of parameters constituting the initial first submatrix obtained by the adjustment of the machine learning and the values ($A_{k,j}^i$) of elements of a diagonal matrix used in each stage, and information on parameters other than these may be omitted. The control unit 11 stores the generated learning result data 125 in a predetermined storage area.

The predetermined storage area may be, for example, the RAM in the control unit 11, the storage unit 12, an external storage device, a storage medium, or a combination thereof. The storage medium may be, for example, a CD, a DVD, or the like, and the control unit 11 may store the learning result data 125 in the storage medium via the drive 17. The external storage device may be, for example, a data server such as a network attached storage (NAS). In this case, the control unit 11 may store the learning result data 125 in the data server through a network by using the communication interface 13. The external storage device may be, for example, an external storage device connected to the model generation device 1 via the external interface 14.

When the storage of the learning result data 125 is completed, the control unit 11 terminates the processing procedure of the model generation device 1 according to this operation example.

The generated learning result data 125 may be provided to the inference device 2 at any timing. For example, the control unit 11 may transfer the learning result data 125 to the inference device 2 as the processing of step S103 or apart from the processing of step S103. The inference device 2 may acquire the learning result data 125 by receiving this transfer. For example, the inference device 2 may acquire the learning result data 125 by accessing the model generation device 1 or the data server through a network by using the communication interface 23. For example, the inference device 2 may acquire the learning result data 125 through the storage medium 92. For example, the learning result data 125 may be incorporated into the inference device 2 in advance.

The control unit 11 may update or newly generate the learning result data 125 by repeating the processing of steps S101 to S103 on a regular or irregular basis. During this repetition, at least a portion of the learning data set 3 used for machine learning may be changed, corrected, added, deleted, or the like as appropriate. Then, the control unit 11 may update the learning result data 125 stored in the inference device 2 by providing the updated or newly generated learning result data 125 to the inference device 2 by any method.

[Inference Device]

Fig. 11 is a flowchart showing an example of a processing procedure regarding the execution of an inference task by the inference device 2 according to the present embodiment. The processing procedure of the inference device 2 to be described below is an example of an inference method. However, the processing procedure of the inference device 2 to be described below is merely an example, and each step may be changed as far as possible. With respect to the following processing procedure, steps may be omitted, replaced, or added appropriately in accordance with an embodiment.

(Step S201)

In step S201, the control unit 21 operates as the data acquisition unit 211 and acquires the target data 221. The target data 221 is a sample of a predetermined type of data on which an estimation task is performed. A method for acquiring the target data 221 may be appropriately determined in accordance with the type of data. As an example, the target data 221 may be generated by observing an inference target with a sensor (for example, a camera). A route for acquiring the target data 221 may not be particularly limited, and may be selected appropriately in accordance with an embodiment. As an example, the control unit 21 may directly acquire the target data 221 from a device such as a sensor. In another example, the control unit 21 may indirectly acquire the target data 221 via another computer, the storage medium 92, or the like. When the target data 221 is acquired, the control unit 21 causes the processing to proceed to the next step S202.

(Step S202)

In step S202, the control unit 21 operates as the inference unit 212 and performs setting of the trained inference model 5 with reference to the learning result data 125. Then, the control unit 21 performs an inference task on the acquired target data 221 by using the trained inference model 5.

The inference processing in step S202 may be the same as the computation processing in the forward propagation (that is, inference trial) phase in the training processing of the machine learning. That is, the control unit 21 inputs the target data 221 to the input layer 51 and executes computation processing of forward propagation of the inference model 5. During the computation processing of the forward propagation, the control unit 21 calculates a product of a submatrix constituting a first submatrix and an input vector. When a parameter matrix corresponds to the input layer 51, an input vector is the target data 221. When a parameter matrix corresponds to the intermediate layer 52 or the output layer 53, an input vector is a calculation result (output) of a layer before the corresponding layer. Next, the control unit 21 calculates a product of the result of the product of the first submatrix and the corresponding element of a diagonal matrix to thereby derive a product of a submatrix constituting a second submatrix and an input vector. That is, the control unit 21 multiplies the result of the product of the first submatrix and the diagonal matrix, and acquires a calculation result obtained by the multiplication as a result of the product of the second submatrix and the input vector. When a scaling relationship is recursively established, the control unit 21 executes the computations of the first to fifth steps of the forward propagation phase. As a result of these computations, the control unit 21 acquires an output value corresponding to the result of performing the inference task on the target data 221 from the output layer 53. When the inference processing is completed, the control unit 21 causes the processing to proceed to the next step S203.

(Step S203)

In step S203, the control unit 21 operates as the output unit 213 and outputs information on the result of performing the inference task (inference result).

An output destination and the content of information to be output may be determined appropriately in accordance with an embodiment. For example, the control unit 21 may output the inference result obtained in step S202 to the output device 26 as it is. The control unit 21 may execute arbitrary information processing based on the obtained inference result. Then, the control unit 21 may output a result of executing the information processing as information on the inference result. The output of the result of executing this information processing may include controlling the operation of a device to be controlled in accordance with the inference result, and the like. The output destination may be, for example, the output device 26, an output device of another computer, a device to be controlled, or the like.

When the output of the information on the result of executing the inference task is completed, the control unit 21 terminates a processing procedure of the inference device 2 according to this operation example. The control unit 21 may continuously and repeatedly execute a series of information processing from step S201 to step S203. The timing of repetition may be determined appropriately in accordance with an embodiment. Thereby, the inference device 2 may be configured to continuously and repeatedly perform the above-described inference task.

[Features]

As described above, according to the model generation device 1 of the present embodiment, it is possible to generate a trained inference model 5 that is represented by a matrix including a first submatrix and a second submatrix and that has been adjusted such that the value of each element of the second submatrix matches a product of the first submatrix and a diagonal matrix through the processing of steps S101 to S103.

Thereby, in the processing of step S202 of the inference device 2, even when information on the second submatrix is not stored, a computation result of the second submatrix can be obtained by reusing a computation result of the first submatrix. Similarly, an initial value is given to each parameter to satisfy such a relationship (that is, the values of elements of the first submatrix and the diagonal matrix are set), and thus a computation result of the second submatrix can be obtained by reusing a computation result of the first submatrix without storing information on the second submatrix even in the processing of step S102. Thus, according to the present embodiment, the information on the second submatrix can be omitted from the learning result data 125, and the number of parameters constituting the inference model 5 can be substantially reduced. Specifically, the number of parameters can be reduced by a difference between the number of elements of the second submatrix and the number of elements of the diagonal matrix other than 0. When a scaling relationship is established recursively, the number of parameters can be reduced such that the number of elements of at least a portion of a parameter matrix becomes the number of elements of a submatrix constituting an initial first submatrix and the number of elements of a diagonal matrix used in each stage. Thus, according to the present embodiment, it is possible to reduce the amount of calculation required for the computation processing of the inference model 5 and reduce a load on calculational resources. Also in the present embodiment, other high-speed methods such as distributed processing exemplified in Patent Literature 2 and Patent Literature 3 and high-speed processing of a convolution operation exemplified in Non-Patent Literature 1 may be used together.

§4 Modification Example

Although the embodiment of the present invention has been described above in detail, the above description is merely an example of the present invention in every respect. It is needless to say that various modifications or variations can be made without departing from the scope of the invention. For example, the following changes can be made. Hereinafter, the same components as those in the above-described embodiment will be denoted by the same reference numerals and signs, and descriptions of the same points as in the above-described embodiment are omitted appropriately. The following modification examples can be combined appropriately.

<4.1>

The inference system 100 according to the above-described embodiment may be applied to any scene where an arbitrary inference task is performed on a predetermined type of data. The Inference task may be, for example, determining whether a product shown in image data has a defect, identifying the type of object shown in image data, inferring the state of an object shown in sensing data, or the like. The training data 31 and the target data 221 may be, for example, image data, sound data, numerical data, text data, measurement data obtained by various sensors, and the like. The training data 31 and the target data 221 may be sensing data generated by observing an arbitrary target with a sensor. The sensor may be, for example, a camera, a microphone, an encoder, an environmental sensor, a vital sensor, a medical examination device, an in-vehicle sensor, a home security sensor, or the like. The environmental sensor may be, for example, a barometer, a thermometer, a hygrometer, a sound pressure meter, a sound sensor, an ultraviolet sensor, an illuminometer, a rain gauge, a gas sensor, or the like. The vital sensor may be, for example, a sphygmomanometer, a pulse meter, a heart rate meter, an electrocardiograph, an electromyograph, a thermometer, a skin electrometer, a microwave sensor, an electroencephalograph, a magnetoencephalograph, an activity meter, a blood glucose meter, an electrooculography sensor, an eye movement measuring instrument, or the like. The medical examination device may be, for example, a computed tomography (CT) device, a magnetic resonance imaging (MRI) device, or the like. The in-vehicle sensor may be, for example, an image sensor, a light detection and ranging (Lidar) sensor, a millimeter wave radar, an ultrasonic sensor, an acceleration sensor, or the like. The home security sensor may be, for example, an image sensor, an infrared sensor, an activity (voice) sensor, a gas ($CO_2$ or the like) sensor, a current sensor, a smart meter (sensors that measure power usage for home appliances, lighting, and the like), or the like. Modification examples with limited application scenes will be exemplified below.

(A) Scene of Appearance Inspection

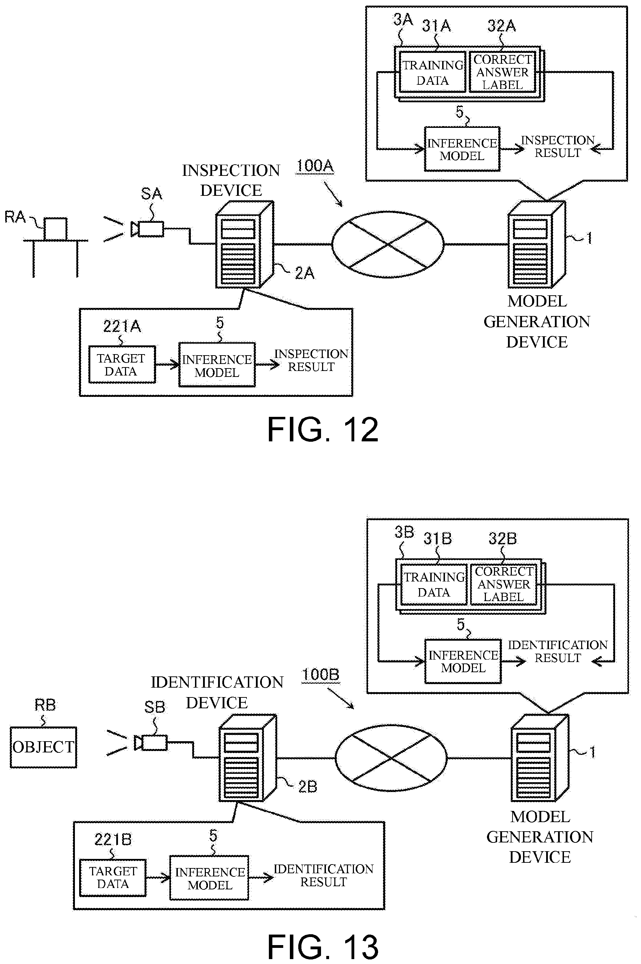

Fig. 12 schematically illustrates an example of a scene to which an inspection system 100A according to a first modification example is applied. This modification example is an example in which the above-described embodiment is applied to a scene in which the appearance of a product is inspected using image data showing the product. The inspection system 100A according to this modification example is an example of the inference system 100 described above, and includes a model generation device 1 and an inspection device 2A. As in the above-described embodiment, the model generation device 1 and the inspection device 2A may be connected to each other via a network.

Predetermined types of data (training data 31A and target data 221A) handled in this modification example are constituted by image data (image samples) showing a product RA. The image data may be obtained by imaging the product RA with a camera SA. An inference task is to determine whether the product RA shown in the image data has a defect. Determining whether the product has a defect ma include identifying the presence or absence of a defect, estimating the probability that the product RA has a defect, and identifying the type of defect included in the product RA (a type indicating that "there is no defect" may be included), extracting the range of a defect included in the product RA, or a combination thereof. Except for these limitations, the inspection system 100A according to this modification example may be configured in the same manner as the inference system 100 according to the above-described embodiment.

The product RA may be a product that is conveyed in a manufacturing line, such as electronic equipment, an electronic part, an automobile part, a medicine, and food. The electronic part may be, for example, a basis, a chip capacitor, a liquid crystal, a relay winding, or the like. The automotive part may be, for example, a connecting rod, a shaft, an engine block, a power window switch, a panel, or the like. The medicine may be, for example, a packaged tablet, an unpackaged tablet, or the like. The product RA may be a final product produced after a manufacturing process is completed, an intermediate product produced during a manufacturing process, or an initial product prepared before a manufacturing process. Defects may be, for example, scratches, stains, cracks, dents, burrs, color unevenness, foreign matter contamination, and the like.

(Model Generation Device)

In this modification example, the model generation device 1 acquires a plurality of learning data sets 3A in step S101 described above. Each learning data set 3A is constituted by a combination of the training data 31A and a correct answer label 32A. The training data 31A is constituted by image data showing the product RA. Any type of camera may be used to acquire the training data 31A. The correct answer label 32A is configured to indicate correct answers of inference tasks regarding a defect of a product shown in the training data 31A, such as the presence or absence of a defect, the type of defect, and the range of a defect.

The model generation device 1 performs machine learning of the inference model 5 using the plurality of learning data sets 3A acquired through the processing of step S102. Thereby, it is possible to generate the trained inference model 5 that has acquired the ability to determine whether the product RA shown in the image data has a defect and that has been adjusted such that the value of each element of a second submatrix matches a product of a first submatrix and a diagonal matrix. The model generation device 1 appropriately stores information on the trained inference model 5 as the learning result data 125 in a predetermined storage area through the processing of step S103. The generated learning result data 125 may be provided to the inspection device 2A at any timing.

(Inspection Device)

The inspection device 2A is an example of the inference device 2 described above. A hardware configuration and a software configuration of the inspection device 2A may be the same as those of the inference device 2 according to the above-described embodiment. In this modification example, the inspection device 2A may be connected to the camera SA via a communication interface or an external interface. Alternatively, the camera SA may be connected to another computer, and the inspection device 2A may be connected to the other computer to be able to acquire image data from the camera SA. The camera SA may be, for example, a general RGB camera, a depth camera, an infrared camera, or the like. The camera SA may be appropriately disposed at a place where the product RA can be imaged. For example, the camera SA may be disposed near a conveyor device that carries the product RA.

The inspection device 2A executes a series of information processing related to appearance inspection by the same processing procedure as that for the inference device 2 described above. That is, in step S201, the inspection device 2A acquires the target data 221A from the camera SA. The target data 221A is constituted by image data showing the product RA to be inspected. In step S202, the inspection device 2A determines whether the product RA shown in the target data 221A (image data) has a defect by using the trained inference model 5. Then, in step S203, the inspection device 2A outputs information regarding a result of determining whether the product RA has a defect. In one example, the inspection device 2A may output the result of determining whether the product RA has a defect to an output device as it is. In another example, when the inspection device 2A determines that the product RA has a defect, the inspection device 2A may output a warning to the output device to give a notification that the product has a defect. An output destination of such information is not limited to the output device of the inspection device 2A, and may be an output device of another computer. In still another example, when the inspection device 2A is connected to a conveyor device that conveys the product RA, the inspection device 2A may control the conveyor device based on a determination result so that defective products and nondefective products are conveyed in separate lines.

(Features)

According to this modification example, it is possible to reduce the amount of calculation required for computation processing of the inference model 5 used for appearance inspection and to reduce a load on calculational resources by substantially reducing the number of parameters constituting the inference model 5. Thereby, it is possible to expect effects such as speed-up of appearance inspection and execution of appearance inspection with an inexpensive computer.

(B) Scene of Image Identification

Fig. 13 schematically illustrates an example of a scene to which an identification system 100B according to a second modification example is applied. This modification example is an example in which the above-described embodiment is applied to a scene in which an object shown in image data is identified. The identification system 100B according to this modification example is an example of the inference system 100 described above, and includes a model generation device 1 and an identification device 2B. As in the above-described embodiment, the model generation device 1 and the identification device 2B may be connected to each other via a network.

Predetermined types of data (training data 31B and target data 221B) handled in this modification example are constituted by image data (image samples) showing an object RB. The image data may be obtained by imaging the object RB with a camera SB. An inference task is to identify the type of object RB shown in the image data. Identifying the type of object RB may include segmentation (extracting a range in which the object is shown). The object RB may be a person or any object. The range in which the object is shown in the image data may be a specific portion (for example, a face, or the like) of the object RB, or may be the entire object RB. When the object RB is a person, an identification target may be, for example, a part of the body such as a face. Identifying the type of person may be, for example, estimating an individual or estimating a body part (a face, an arm, a leg, a joint, or the like). The same is true for arbitrary objects. Except for these limitations, the identification system 100B according to this modification example may be configured in the same manner as the inference system 100 according to the above-described embodiment.

(Model Generation Device)

In this modification example, the model generation device 1 acquires a plurality of learning data sets 3B in step S101 described above. Each learning data set 3B is constituted by a combination of training data 31B and a correct answer label 32B. The training data 31B is constituted by image data showing an object RB. Any type of camera may be used to acquire the training data 31B. The correct answer label 32B is configured to indicate the type (correct answer) of object RB shown in the training data 31B.

The model generation device 1 performs machine learning of the inference model 5 by using the plurality of acquired learning data sets 3B through the processing of step S102. Thereby, it is possible to generate the trained inference model 5 that has acquired the ability to identify the type of object RB shown in image data and that has been adjusted such that the value of each element of a second submatrix matches a product of a first submatrix and a diagonal matrix. The model generation device 1 appropriately stores information on the trained inference model 5 as learning result data 125 in a predetermined storage area through the processing of step S103. The generated learning result data 125 may be provided to the identification device 2B at any timing.

(Identification Device)

The identification device 2B is an example of the inference device 2 described above. A hardware configuration and a software configuration of the identification device 2B may be the same as those of the inference device 2 according to the above-described embodiment. In this modification example, the identification device 2B may be connected to the camera SB via a communication interface or an external interface. Alternatively, the camera SB may be connected to another computer, and the identification device 2B may be connected to the other computer to be able to acquire image data from the camera SB. The camera SB may be, for example, a general RGB camera, a depth camera, an infrared camera, or the like. The camera SB may be appropriately disposed at a place where the object RB can be imaged.

The identification device 2B executes a series of information processing related to the identification of the object RB by the same processing procedure as that for the inference device 2 described above. That is, in step S201, the identification device 2B acquires the target data 221B from the camera SB. The target data 221B is constituted by image data showing the object RB to be identified. In step S202, the identification device 2B identifies the type of object RB shown in the target data 221B (image data) by using the trained inference model 5. Then, in step S203, the identification device 2B outputs information on a result of identifying the type of object RB. In one example, the identification device 2B may output the result of identifying the object RB to an output device as it is. In another example, the identification device 2B may execute arbitrary information processing in accordance with the result of identifying the object RB. For example, the identification device 2B may execute information processing such as unlocking when an identified target person (object RB) is a specific individual.

(Features)

According to this modification example, it is possible to reduce the amount of calculation required for the computation processing of the inference model 5 used to identify the object RB and to reduce a load on calculational resources by substantially reducing the number of parameters constituting the inference model 5. As a result, it is possible to expect effects such as speed-up of identification processing of the object RB and execution of identification processing with an inexpensive computer.

(C) Scene of State Inference

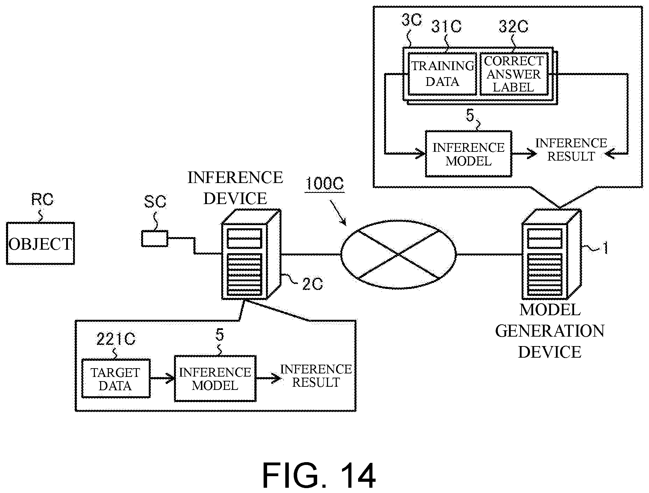

Fig. 14 schematically illustrates an example of a scene to which an inference system 100C according to a third modification example is applied. This modification example is an example in which the above-described embodiment is applied to a scene in which the state of an object RC shown in sensing data is inferred (identified/regressed). The inference system 100C according to this modification example is an example of the inference system 100 described above, and includes a model generation device 1 and an inference device 2C. As in the above-described embodiment, the model generation device 1 and the inference device 2C may be connected to each other via a network.

Predetermined types of data (training data 31C and target data 221C) handled in this modification example are constituted by sensing data generated by observing the object RC with a sensor SC. The sensor SC may be, for example, a camera, a microphone, an encoder, an environmental sensor, a vital sensor, a medical examination device, an in-vehicle sensor, a home security sensor, or the like. An inference task is to infer (identify/regress) the state of the object RC shown in the sensing data. Inferring may include predicting (that is, inferring a future state from the time when the sensing data is obtained). Except for these limitations, the inference system 100C according to this modification example may be configured in the same manner as the inference system 100 according to the above-described embodiment.

The type of sensor SC may be selected appropriately in accordance with an inference task. As an example, the object RC is a person, and inferring the state of the object RC may be inferring the state of the target person. In this case, the sensor SC may be constituted by, for example, at least one of a camera, a microphone, a vital sensor, and a medical examination device. Inferring the state of the target person may be, for example, inferring a health condition such as the probability of appearance of a predetermined disease or the probability of occurrence of a change in physical condition. Alternatively, the target person may be, for example, a driver of a vehicle, and inferring the state of the target person may be inferring the state of the driver (for example, the degree of sleepiness, the degree of fatigue, the degree of relaxation, or the like).

As another example, the object RC is an industrial machine, and inferring the state of the object RC may be inferring (detecting or predicting) whether there is an abnormality in the industrial machine. In this case, the sensor SC may be constituted by, for example, at least one of a microphone, an encoder, and an environmental sensor. Sensing data may be constituted by an encoder value of a motor, a temperature, an operation sound, and the like.

As another example, the object RC is an object existing outside a vehicle, and inferring the state of the object RC may be inferring a situation outside the vehicle. In this case, the sensor SC may be constituted by, for example, at least one of a camera and an in-vehicle sensor. Inferring the situation outside the vehicle may be, for example, inferring the attributes of objects existing outside the vehicle, inferring a congestion situation, inferring the risk of an accident, or the like. The objects existing outside the vehicle may be, for example, roads, traffic lights, obstacles (persons, objects), and the like. Inferring the attributes of objects existing outside the vehicle may include, for example, inferring the occurrence of an event such as jumping-out of a person or a vehicle, abrupt start, abrupt stopping, lane changing, or the like.

As another example, the object RC is an object that exists in a specific location such as outdoors or a predetermined indoor space (for example, inside a vinyl house), and inferring the state of the object RC may be to infer a situation in a specific place. It may be to infer the situation of In this case, the sensor SC may be constituted by at least one of a camera, a microphone, and an environment sensor, for example. As a specific example, the object RC may be a plant, and inferring the situation of a specific place may be inferring a plant cultivation situation.

As another example, the object RC is, for example, an object that exists inside a house, and inferring the state of the object RC may be inferring the situation inside the house. In this case, the sensor SC may be constituted by, for example, at least one of a camera, a microphone, an environmental sensor, and a home security sensor.

(Model Generation Device)

In this modification example, the model generation device 1 acquires a plurality of learning data sets 3C in step S101 described above. Each learning data set 3C is constituted by a combination of training data 31C and a correct answer label 32C. The training data 31C is constituted by sensing data generated by observing the object RC with the sensor SC. The correct answer label 32C is configured to indicate the state (correct answer) of the object RC shown in the training data 31C.

The model generation device 1 performs machine learning of the inference model 5 by using the plurality of acquired learning data sets 3C through the processing of step S102. Thereby, it is possible to generate the trained inference model 5 that has acquired the ability to infer the state of the object RC shown in sensing data and that has been adjusted such that the value of each element of a second submatrix matches a product of a first submatrix and a diagonal matrix. The model generation device 1 appropriately stores information on the trained inference model 5 as learning result data 125 in a predetermined storage area through the processing of step S103. The generated learning result data 125 may be provided to the inference device 2C at any timing.

(Inference Device)

The inference device 2C is an example of the inference device 2 described above. A hardware configuration and a software configuration of the inference device 2C may be the same as those of the inference device 2 according to the above-described embodiment. In this modification example, the inference device 2C may be connected to the sensor SC via a communication interface or an external interface. Alternatively, the sensor SC may be connected to another computer, and the inference device 2C may be connected to the other computer to be able to acquire sensing data from the sensor SC.

The inference device 2C executes a series of information processing related to state inference of the object RC by the same processing procedure as that for the inference device 2 described above. That is, in step S201, the inference device 2C acquires the target data 221C from the sensor SC. The target data 221C is constituted by sensing data generated by observing the object RC, which is an inference target, by the sensor SC. In step S202, the inference device 2C infers the state of the object RC shown in the target data 221C (sensing data) by using the trained inference model 5.

Then, in step S203, the inference device 2C outputs information on a result of inferring the state of the object RC. In one example, the inference device 2C may output the result of inferring the state of the object RC to an output device as it is. As another example, the inference device 2C may execute arbitrary information processing in accordance with the result of inferring the state of the object RC. As a specific example, when inferring the state of the object RC is to infer a health condition of a target person, the inference device 2C may output a warning to give a notification that the target person's health condition is abnormal when it is determined that the target person's health condition is abnormal (for example, the probability of appearance of a predetermined disease exceeds a threshold value). As another specific example, when inferring the state of the object RC is to infer the state of a driver, the inference device 2C may perform an output, such as giving a notice of a message for prompting the driver to take a break or prohibiting switching from automatic driving to manual driving, when the degree of sleepiness or the degree of fatigue exceeds a threshold value. As another specific example, when inferring the state of the object RC is to infer whether there is an abnormality in an industrial machine, the inference device 2C may output a warning to give a notification that there is an abnormality in the industrial machine or there is a sign of it when it is determined that there is an abnormality in the industrial machine or there is a sign of it. As another specific example, when inferring the state of the object RC is to infer a situation outside the vehicle, the inference device 2C may determine an operation command for the vehicle in accordance with the inferred situation outside the vehicle and may control the vehicle in response to the determined operation command (for example, the vehicle may be temporarily stopped when a person's jumping-out is detected).

(Features)

According to this modification example, it is possible to reduce the amount of calculation required for computation processing of the inference model 5 used to infer the state of the object RC and to reduce a load on calculational resources by substantially reducing the number of parameters constituting the inference model 5. As a result, it is possible to expect effects such as speed-up of processing for inferring the state of the object RC and execution of inference processing with an inexpensive computer.

<4.2>

In the above-described embodiment, the inference model 5 is constituted by a fully-connected neural network. However, the type of neural network constituting the inference model 5 may not be limited to such an example. In another example, the inference model 5 may be constituted by a convolutional neural network, a recurrent neural network, or the like. The neural network that constitutes the inference model 5 may include other types of layers, such as a convolution layer, a pooling layer, a normalization layer, and a dropout layer.

In the above-described embodiment, the type of machine learning model that constitutes the inference model 5 may not be limited to the neural network. As long as parameters can be represented by a matrix, the type of machine learning model that constitutes the inference model 5 is not particularly limited, and may be selected appropriately in accordance with an embodiment. As another example, the inference model 5 may be constituted by, for example, a principal component vector obtained by principal component analysis, a support vector machine, and the like. A machine learning method may be appropriately determined in accordance with the type of machine learning model adopted.

[Reference Signs List]

    1 Model generation device
    11 Control unit
    12 Storage unit
    13 Communication interface
    14 External interface
    15 Input device
    16 Output device
    17 Drive
    81 Model generation program
    91 Storage medium
    111 Data acquisition unit

112 Learning processing unit
113 Storage processing unit
125 Learning result data
2 Inference device
21 Control unit
22 Storage unit
23 Communication interface
24 External interface
25 Input device
26 Output device
27 Drive
82 Inference program
92 Storage medium
211 Data acquisition unit
212 Inference unit
213 Output unit
221 Target data
3 Learning data set
31 Training data
32 Correct answer label
5 Inference model
51 Input layer
52 Intermediate (hidden) layer
53 Output layer

**Claims**

1. An inference device comprising:

   a data acquisition unit that acquires target data;
   an inference unit that performs an inference task on the acquired target data by using an inference model trained by machine learning; and
   an output unit that outputs information on a result of performing the inference task,
   wherein at least some of a plurality of parameters of the inference model are represented by a matrix,
   the matrix includes a first submatrix and a second submatrix,
   the number of elements in each row and each column of the first submatrix and the second submatrix are the same, and
   a value of each element of the second submatrix is adjusted to match a product of the first submatrix and a diagonal matrix.

2. The inference device according to claim 1,

   wherein, in at least a portion of the matrix, a scaling relationship is established such that
   at least a portion of the matrix is divided into M×N submatrices so that submatrices having the same number of elements in each row and each column are arranged in M rows and N columns,
   the submatrix disposed in any one row constitutes the first submatrix for submatrices disposed in rows other than the row in each column, and
   the submatrices disposed in the other rows constitute the second submatrix.

3. The inference device according to claim 2,
   wherein M and N are the same prime number S.

4. The inference device according to claim 2 or 3,
   wherein the scaling relationship is recursively established within at least a portion of the matrix by repeating the establishment of the scaling relationship within the submatrices that constitute the first submatrix.

5. The inference device according to claim 4,

wherein M and N are the same prime number S, and
at least a portion of the matrix is constituted by a square matrix of which the number of elements is a power of the prime number S.

6. The inference device according to any one of claims 2 to 5,
wherein M and N are each 2.

7. The inference device according to any one of claims 1 to 6,

wherein the inference model is constituted by a neural network, and
each element of the matrix is configured to correspond to a weight of connection between neurons in the neural network.

8. The inference device according to any one of claims 1 to 7,

wherein the target data is constituted by image data showing a product, and
the inference task is to determine whether the product shown in the image data has a defect.

9. A model generation device comprising:

a data acquisition unit that acquires a plurality of learning data sets each constituted by a combination of training data and a correct answer label indicating a correct answer of an inference task for the training data; and
a learning processing unit that performs machine learning of an inference model by using the plurality of learning data sets,
the learning processing unit being configured such that
at least some of a plurality of parameters of the inference model are represented by a matrix,
the matrix includes a first submatrix and a second submatrix,
the number of elements in each row and each column of the first submatrix and the second submatrix are the same, and
the machine learning is performed for each of the learning data sets by training the inference model so that a result of performing the inference task on the training data by using the inference model matches a correct answer indicated by the correct answer label and a value of each element of the second submatrix is adjusted to match a product of the first submatrix and a diagonal matrix.

10. The model generation device according to claim 9,
wherein training the inference model includes adjusting a value of each element of the matrix so that a scaling relationship is established in at least a portion of the matrix, the scaling relationship being established such that at least a portion of the matrix is divided into M×N submatrices so that submatrices having the same number of elements in each row and each column are arranged in M rows and N columns, the submatrix disposed in any one row constitutes the first submatrix for submatrices disposed in rows other than the row in each column, and the submatrices disposed in the other rows constitute the second submatrix.

11. The model generation device according to claim 9,

wherein the inference model is constituted by a neural network,
each element of the matrix is configured to correspond to a weight of connection between neurons in the neural network,
training the inference model includes
adjusting a value of each element of at least a portion of the matrix so that the scaling relationship is recursively established within at least a portion of the matrix by repeating the establishment of the scaling relationship in the submatrices that constitute the first submatrix until each submatrix becomes a 1 × 1 matrix,
adjusting the value of each element of at least a portion of the matrix includes giving an initial value of each element of at least a portion of the matrix so that the scaling relationship is recursively established,
deriving a result of performing an inference task on the training data of each learning data set in a forward propagation phase, and
adjusting values of each element of at least a portion of the matrix and each element of the diagonal matrix by backpropagating a gradient of an error between the derived result of performing the inference task and a corresponding correct answer indicated by a correct answer label in a backpropagation phase,

computation of the forward propagation phase includes

a first step of calculating a product of the $1 \times 1$ matrix constituting an initial first submatrix and an input vector,

a second step of deriving a product of the $1 \times 1$ matrix constituting an initial second submatrix and an input vector by calculating a product of a result of the obtained product of the initial first submatrix and a corresponding element of the diagonal matrix,

a third step of deriving a product of a submatrix constituting a first submatrix in a next stage and an input vector from the result of the product of the first submatrix and the result of the product of the second submatrix which are obtained in a target stage,

a fourth step of deriving a product of a submatrix constituting the second submatrix in a next stage and an input vector by calculating a product of the result of the obtained product of the first submatrix in the next stage and a corresponding element of the diagonal matrix, and

a fifth step of deriving a product of at least a portion of the matrix and an input vector by substituting the result of the product of the initial first submatrix and the result of the product of the initial second submatrix, which are respectively obtained in the first step and the second step, as initial values of the result of the product of the first submatrix and the result of the product of the second submatrix which are obtained in the target stage, and recursively repeating the third step and the fourth step, and

computation of the backpropagation phase includes

a first step of acquiring a gradient of the error with respect to the product of at least a portion of the matrix and the input vector,

a second step of deriving a gradient of an error for each element of a diagonal matrix used in a final stage of the recursive repetition of the forward propagation phase, based on the acquired gradient of the error and a value of a product of a submatrix constituting the first submatrix and an input vector in the final stage,

a third step of deriving a gradient of an error for a product of a submatrix constituting the first submatrix in the final stage and an input vector, based on the acquired gradient of the error and a value of each element of the diagonal matrix used in the final stage,

a fourth step of deriving a gradient of an error for each element of the diagonal matrix used in the target stage, based on the acquired gradient of the error, a value of a product of the submatrix constituting the first submatrix and an input vector in a target stage of the recursive repetition of the forward propagation phase, and a gradient of an error for a product of the submatrix constituting the first submatrix and an input vector in a stage next to the target stage in the recursive repetition of the forward propagation phase,

a fifth step of deriving a gradient of an error for a product of the submatrix constituting the first submatrix and an input vector in the target stage, based on the acquired gradient of the error, a value of each element of the diagonal matrix used in the target stage, and a gradient of an error for a product of the submatrix constituting the first submatrix and the input vector in the next stage,

a sixth step of deriving a gradient of an error for each element of a diagonal matrix used in each stage by substituting the gradient of the error for the product of the submatrix constituting the first submatrix and the input vector in the final stage, which is derived in the third step of the backpropagation phase, as an initial value of the gradient of the error for the product of the submatrix constituting the first submatrix and the input vector in the next stage, and recursively repeating the fourth and fifth steps of the backpropagation phase until a gradient of an error for each element of a diagonal matrix used in an initial stage of the recursive repetition of the forward propagation phase is derived,

a seventh step of deriving a gradient of an error for an element of the $1 \times 1$ matrix constituting the initial first submatrix, based on the input vector and the gradient of the error for the product of the submatrix constituting the first submatrix and the input vector in the initial stage, which is derived in the sixth step, and

an eighth step of adjusting values of each of elements of the diagonal matrix used in each stage and each of the elements of the $1 \times 1$ matrix constituting the initial first submatrix, based on the gradient of the error which is derived for each of the elements of the diagonal matrix used in each stage and each of the elements of the $1 \times 1$ matrix constituting the initial first submatrix.

12. An inference method of causing a computer to execute the following steps comprising:

acquiring target data;
performing an inference task on the acquired target data by using an inference model trained by machine learning; and
outputting information on a result of performing the inference task,
wherein at least some of a plurality of parameters of the inference model are represented by a matrix,
the matrix includes a first submatrix and a second submatrix,
the number of elements in each row and each column of the first submatrix and the second submatrix are the same, and

a value of each element of the second submatrix is adjusted to match a product of the first submatrix and a diagonal matrix.

13. An inference program causing a computer to execute the following steps:

acquiring target data;

performing an inference task on the acquired target data by using an inference model trained by machine learning; and

outputting information on a result of performing the inference task,

wherein at least some of a plurality of parameters of the inference model are represented by a matrix,

the matrix includes a first submatrix and a second submatrix,

the number of elements in each row and each column of the first submatrix and the second submatrix are the same, and

a value of each element of the second submatrix is adjusted to match a product of the first submatrix and a diagonal matrix.

$$Y = \begin{bmatrix} y_1 \\ y_2 \end{bmatrix} = \begin{bmatrix} w_1 & w_2 \\ w_3 & w_4 \end{bmatrix} \begin{bmatrix} x_1 \\ x_2 \end{bmatrix}$$

$$= \begin{bmatrix} w_1 & w_2 \\ a_1 w_1 & a_2 w_2 \end{bmatrix} \begin{bmatrix} x_1 \\ x_2 \end{bmatrix}$$

$$= \begin{bmatrix} w_1 x_1 + w_2 x_2 \\ a_1 w_1 x_1 + a_2 w_2 x_2 \end{bmatrix}$$

3  31  32

TRAINING DATA

CORRECT ANSWER LABEL

5

INFERENCE MODEL

INFERENCE RESULT

1

MODEL GENERATION DEVICE

221  5

TARGET DATA → INFERENCE MODEL → INFERENCE RESULT

2

INFERENCE DEVICE

100

## FIG. 1

1

MODEL GENERATION DEVICE

12 — STORAGE UNIT

CONTROL UNIT

81 — MODEL GENERATION PROGRAM

CPU

3 — LEARNING DATA SET

RAM

11

125 — LEARNING RESULT DATA

ROM

13

COMMUNICATION I/F

15 — INPUT DEVICE

14

16 — OUTPUT DEVICE

EXTERNAL I/F

91

DRIVE

17

STORAGE MEDIUM

## FIG. 2

FIG. 3

FIG. 4

$$Y = WX = \begin{bmatrix} w_1 & \cdots & w_N \\ w_{N+1} & \cdots & w_{2N} \\ \vdots & \ddots & \vdots \\ w_{(M-1)N+1} & \cdots & w_{MN} \end{bmatrix} \begin{bmatrix} x_1 \\ x_2 \\ \vdots \\ x_N \end{bmatrix}$$

$$= \begin{bmatrix} w_1 & \cdots & w_N \\ a_{2,1}w_1 & \cdots & a_{2,N}w_N \\ \vdots & \ddots & \vdots \\ a_{M,1}w_1 & \cdots & a_{M,N}w_N \end{bmatrix} \begin{bmatrix} x_1 \\ x_2 \\ \vdots \\ x_N \end{bmatrix}$$

## FIG. 5A

$$Y = \begin{bmatrix} y_1 \\ y_2 \\ y_3 \\ y_4 \end{bmatrix} = WX = \begin{bmatrix} \overset{W_1}{\overbrace{\begin{matrix} w_1 & w_2 \\ a_1w_1 & a_2w_2 \end{matrix}}} & \overset{W_2}{\overbrace{\begin{matrix} w_3 & w_4 \\ a_3w_3 & a_4w_4 \end{matrix}}} \\ \underset{A_1W_1}{} & \underset{A_2W_2}{} \end{bmatrix} \begin{bmatrix} x_1 \\ x_2 \\ x_3 \\ x_4 \end{bmatrix}$$

※ A1 AND A2 ARE EACH
DIAGONAL MATRIX OF $2\times2$

## FIG. 5B

$$W_j^i = \begin{bmatrix} W_{k(i,j)+1}^{i-1} & W_{k(i,j)+2}^{i-1} & \cdots & W_{k(i,j)+q_{i-1}}^{i-1} \\ A_{2,k(i,j)+1}^{i-1} W_{k(i,j)+1}^{i-1} & A_{2,k(i,j)+2}^{i-1} W_{k(i,j)+2}^{i-1} & \cdots & A_{2,k(i,j)+q_{i-1}}^{i-1} W_{k(i,j)+q_{i-1}}^{i-1} \\ \vdots & \vdots & \ddots & \vdots \\ A_{p_{i-1},k(i,j)+1}^{i-1} W_{k(i,j)+1}^{i-1} & A_{p_{i-1},k(i,j)+2}^{i-1} W_{k(i,j)+2}^{i-1} & \cdots & A_{p_{i-1},k(i,j)+q_{i-1}}^{i-1} W_{k(i,j)+q_{i-1}}^{i-1} \end{bmatrix} \Bigg\} \text{ pi-1 SUBMATRICES}$$

$$\underbrace{\phantom{XXXXXXXXXXXXXXXXXXXXXXXXXXXXXXXXXX}}_{\text{qi-1 SUBMATRICES}}$$

$W_1^{l+1}$ : AT LEAST PORTION OF PARAMETER MATRIX (SIZE IS $\prod_{e=1}^{l} p_e \times \prod_{e=1}^{l} q_e$)

$$1 \leq j \leq J_i, \ J_i = \begin{cases} 1 \ (i = l+1) \\ \prod_{e=i}^{l} q_e \ (1 \leq i \leq l) \end{cases}$$

FIG. 5C

2

## INFERENCE DEVICE

| DATA ACQUISITION UNIT | ~211 | INFERENCE UNIT | ~212 | OUTPUT UNIT | ~213 |

LEARNING RESULT DATA ~125

221

TARGET DATA → INFERENCE MODEL → INFERENCE RESULT

5

# FIG. 6

START

S101 ~ ACQUIRE PLURALITY OF LEARNING DATA SETS

S102 ~ PERFORM MACHINE LEARNING OF INFERENCE MODEL USING PLURALITY OF LEARNING DATA SETS

S103 ~ STORE RESULT OF MACHINE LEARNING

END

# FIG. 7

$$y_1 \Longleftarrow [Y_1^1 \quad Y_2^1] \longleftarrow [w_1 \quad w_2] \quad [x_1 \quad x_2]$$

$$y_2 \Longleftarrow [Z_1^1 \quad Z_2^1] \longleftarrow [a_1 \quad a_2]$$

# FIG. 8A

$$\frac{\partial L}{\partial y_1} \implies \begin{bmatrix} \dfrac{\partial L}{\partial Y_1^1} & \dfrac{\partial L}{\partial Y_2^1} \end{bmatrix} \begin{array}{c} \nearrow \begin{bmatrix} \dfrac{\partial L}{\partial x_1} & \dfrac{\partial L}{\partial x_2} \end{bmatrix} \\ \searrow \begin{bmatrix} \dfrac{\partial L}{\partial w_1} & \dfrac{\partial L}{\partial w_2} \end{bmatrix} \end{array}$$

$$\frac{\partial L}{\partial y_2} \implies \begin{bmatrix} \dfrac{\partial L}{\partial Z_1^1} & \dfrac{\partial L}{\partial Z_2^1} \end{bmatrix} \rightarrow \begin{bmatrix} \dfrac{\partial L}{\partial a_1} & \dfrac{\partial L}{\partial a_2} \end{bmatrix}$$

## FIG. 8B

$$y_1 \impliedby [Y_1^1 \quad Y_2^1 \quad Y_3^1 \quad Y_4^1] \impliedby \begin{array}{l} [x_1 \quad x_2 \quad x_3 \quad x_4] \\ [w_1 \quad w_2 \quad w_3 \quad w_4] \end{array}$$

$$y_2 \impliedby [Z_1^1 \quad Z_2^1 \quad Z_3^1 \quad Z_4^1] \leftarrow [a_1 \quad a_2 \quad a_3 \quad a_4]$$

$$[Y_1^2 \quad Y_2^2 \quad Y_3^2 \quad Y_4^2] \begin{array}{l} [Y_1^2 \quad Y_3^2] \leftarrow [Y_1^1 \quad Y_2^1 \quad Y_3^1 \quad Y_4^1] \\ [Y_2^2 \quad Y_4^2] \leftarrow [Z_1^1 \quad Z_2^1 \quad Z_3^1 \quad Z_4^1] \end{array}$$

$$[Z_1^2 \quad Z_2^2 \quad Z_3^2 \quad Z_4^2] \leftarrow [A_1 \quad A_2]$$

$$y_3 \quad y_4$$

## FIG. 9A

44

$$\frac{\partial L}{\partial y_1} \Longrightarrow \left[\frac{\partial L}{\partial Y_1^1} \quad \frac{\partial L}{\partial Y_2^1} \quad \frac{\partial L}{\partial Y_3^1} \quad \frac{\partial L}{\partial Y_4^1}\right]$$

$$\left[\frac{\partial L}{\partial x_1} \quad \frac{\partial L}{\partial x_2} \quad \frac{\partial L}{\partial x_3} \quad \frac{\partial L}{\partial x_4}\right]$$

$$\left[\frac{\partial L}{\partial w_1} \quad \frac{\partial L}{\partial w_2} \quad \frac{\partial L}{\partial w_3} \quad \frac{\partial L}{\partial w_4}\right]$$

$$\frac{\partial L}{\partial y_2} \Longrightarrow \left[\frac{\partial L}{\partial Z_1^1} \quad \frac{\partial L}{\partial Z_2^1} \quad \frac{\partial L}{\partial Z_3^1} \quad \frac{\partial L}{\partial Z_4^1}\right] \longrightarrow \left[\frac{\partial L}{\partial a_1} \quad \frac{\partial L}{\partial a_2} \quad \frac{\partial L}{\partial a_3} \quad \frac{\partial L}{\partial a_4}\right]$$

$$\left[\frac{\partial L}{\partial Y_1^2} \quad \frac{\partial L}{\partial Y_2^2} \quad \frac{\partial L}{\partial Y_3^2} \quad \frac{\partial L}{\partial Y_4^2}\right]$$

$$\left[\begin{array}{c}\frac{\partial L}{\partial y_3} \\ \frac{\partial L}{\partial y_4}\end{array}\right] \Longrightarrow \left[\frac{\partial L}{\partial Z_1^2} \quad \frac{\partial L}{\partial Z_2^2} \quad \frac{\partial L}{\partial Z_3^2} \quad \frac{\partial L}{\partial Z_4^2}\right] \longrightarrow \left[\frac{\partial L}{\partial A_1} \quad \frac{\partial L}{\partial A_2}\right]$$

# FIG. 9B

$$\begin{bmatrix} x_1 & x_2 & \cdots & x_{J_1} \end{bmatrix}$$

$$\begin{bmatrix} Y_1^1 & Y_2^1 & \cdots & Y_{J_1}^1 \end{bmatrix} \longleftarrow \begin{bmatrix} W_1^1 & W_2^1 & \cdots & W_{J_1}^1 \end{bmatrix}$$

$$\vdots$$

$$\begin{bmatrix} Y_1^i & Y_2^i & \cdots & Y_{J_i}^i \end{bmatrix}$$

$$\begin{bmatrix} Z_{2,1}^i & Z_{2,2}^i & \cdots & Z_{2,J_i}^i \end{bmatrix} \longleftarrow \begin{bmatrix} A_{2,1}^i & A_{2,2}^i & \cdots & A_{2,J_i}^i \end{bmatrix}$$

$$\vdots \qquad\qquad\qquad \vdots$$

$$\begin{bmatrix} Z_{p_i,1}^i & Z_{p_i,2}^i & \cdots & Z_{p_i,J_i}^i \end{bmatrix} \longleftarrow \begin{bmatrix} A_{p_i,1}^i & A_{p_i,2}^i & \cdots & A_{p_i,J_i}^i \end{bmatrix}$$

$$\begin{bmatrix} Y_1^{i+1} & Y_2^{i+1} & \cdots & Y_{J_{i+1}}^{i+1} \end{bmatrix}$$

# FIG. 10A

$$\left[\frac{\partial L}{\partial x_1} \quad \frac{\partial L}{\partial x_2} \quad \cdots \quad \frac{\partial L}{\partial x_{J_1}}\right]$$

$$\left[\frac{\partial L}{\partial Y_1^1} \quad \frac{\partial L}{\partial Y_2^1} \quad \cdots \quad \frac{\partial L}{\partial Y_{J_1}^1}\right] \longrightarrow \left[\frac{\partial L}{\partial W_1^1} \quad \frac{\partial L}{\partial W_2^1} \quad \cdots \quad \frac{\partial L}{\partial W_{J_1}^1}\right]$$

$$\vdots$$

$$\left[\frac{\partial L}{\partial Y_1^i} \quad \frac{\partial L}{\partial Y_2^i} \quad \cdots \quad \frac{\partial L}{\partial Y_{J_i}^i}\right]$$

$$\left[\frac{\partial L}{\partial Z_{2,1}^i} \quad \frac{\partial L}{\partial Z_{2,2}^i} \quad \cdots \quad \frac{\partial L}{\partial Z_{2,J_i}^i}\right] \longrightarrow \left[\frac{\partial L}{\partial A_{2,1}^i} \quad \frac{\partial L}{\partial A_{2,2}^i} \quad \cdots \quad \frac{\partial L}{\partial A_{2,J_i}^i}\right]$$

$$\vdots$$

$$\left[\frac{\partial L}{\partial Z_{p_i,1}^i} \quad \frac{\partial L}{\partial Z_{p_i,2}^i} \quad \cdots \quad \frac{\partial L}{\partial Z_{p_i,J_i}^i}\right] \longrightarrow \left[\frac{\partial L}{\partial A_{p_i,1}^i} \quad \frac{\partial L}{\partial A_{p_i,2}^i} \quad \cdots \quad \frac{\partial L}{\partial A_{p_i,J_i}^i}\right]$$

$$\left[\frac{\partial L}{\partial Y_1^{i+1}} \quad \frac{\partial L}{\partial Y_2^{i+1}} \quad \cdots \quad \frac{\partial L}{\partial Y_{J_{i+1}}^{i+1}}\right]$$

## FIG. 10B

START

S201 — ACQUIRE TARGET DATA

S202 — PERFORM INFERENCE TASK ON TARGET DATA BY USING INFERENCE MODEL

S203 — OUTPUT INFORMATION ON INFERENCE RESULT

END

## FIG. 11

## FIG. 12

FIG. 14

## INTERNATIONAL SEARCH REPORT

International application No.

**PCT/JP2022/008658**

### A. CLASSIFICATION OF SUBJECT MATTER

***G06N 20/00***(2019.01)i; ***G06N 3/08***(2006.01)i
FI: G06N20/00; G06N3/08

According to International Patent Classification (IPC) or to both national classification and IPC

### B. FIELDS SEARCHED

Minimum documentation searched (classification system followed by classification symbols)

G06N3/00-99/00; G05B23/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2020-155010 A (HITACHI SOLUTIONS TECH LTD) 24 September 2020 (2020-09-24) abstract, paragraphs [0002], [0055]-[0061] | 1-13 |
| A | JP 2018-109947 A (FUJITSU LTD) 12 July 2018 (2018-07-12) abstract, paragraphs [0029]-[0040] | 1-13 |
| A | US 2019/0303750 A1 (INTEL CORP.) 03 October 2019 (2019-10-03) paragraphs [0017], [0024], fig. 3 | 1-13 |
| E, A | JP 2022-49428 A (KABUSHIKI KAISHA TOSHIBA) 29 March 2022 (2022-03-29) abstract, paragraphs [0055]-[0056] | 1-13 |

☐ Further documents are listed in the continuation of Box C.    ☑ See patent family annex.

| | |
|---|---|
| *   Special categories of cited documents: <br> "A"   document defining the general state of the art which is not considered to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| **06 May 2022** | **24 May 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2022/008658**

| Patent document cited in search report | | | Publication date (day/month/year) | Patent family member(s) | | | Publication date (day/month/year) |
|---|---|---|---|---|---|---|---|
| JP | 2020-155010 | A | 24 September 2020 | WO | 2020/195940 | A1 | |
| JP | 2018-109947 | A | 12 July 2018 | US abstract, paragraphs [0040]-[0 050] | 2018/0189650 | A1 | |
| | | | | CN | 108268947 | A | |
| US | 2019/0303750 | A1 | 03 October 2019 | EP | 3754561 | A1 | |
| | | | | CN | 112101534 | A | |
| JP | 2022-49428 | A | 29 March 2022 | (Family: none) | | | |

Form PCT/ISA/210 (patent family annex) (January 2015)

**REFERENCES CITED IN THE DESCRIPTION**

**Patent documents cited in the description**

- JP 2012026982 A
- JP 2018120441 A

- JP 2020003848 A

**Non-patent literature cited in the description**

- **TYLER HIGHLANDER ; ANDRES RODRIGUEZ.** Very Efficient Training of Convolutional Neural Networks using Fast Fourier Transform and Overlap-and-Add. *arXiv:1601.06815 [cs.NE,* 25 January 2016